# EUROPEAN PATENT SPECIFICATION

(11) **EP 2 388 188 B1**
(45) Date of publication and mention of the grant of the patent: **01.10.2014**
(21) Application number: 10197434.3
(22) Date of filing: 30.12.2010
(51) Int. Cl.: B63B 1/38

(54) **Air cavity vessel**
Schiff mit Lufthohlraum
Bateau à cavité d'air

(30) Priority: 18.05.2010 KR 20100046222; 01.06.2010 KR 20100051790; 04.06.2010 KR 20100052897; 07.06.2010 KR 20100053352
(43) Date of publication of application: 23.11.2011
(73) Proprietor: DAEWOO SHIPBUILDING & MARINE ENGINEERING CO., LTD, Seoul 100-180 (KR)
(72) Inventor: Lee, Young Man, 448-534, YONGIN-SI, GYEONGGI-DO (KR); Choi, Young Bok, 435-040, GUNPO-SI, GYEONGGI-DO (KR); Jang, Young Hun, SEOUL 143-190 (KR); Moon, Young Sik, 656-131, GEOJE-SI, GYEONGSANGNAM-DO (KR); Yoo, Hae Joon, 656-777, GEOJE-SI, GYEONGSANGNAM-DO (KR)
(74) Representative: Intès, Didier Gérard André

(56) References cited:
- EP-A1- 1 361 152
- WO-A1-84/04903
- WO-A1-99/28180
- WO-A1-2005/077746
- GB-A- 1 190 621
- GB-A- 2 065 036

## Description

### FIELD OF INVENTION

The present invention relates to an air cavity vessel which forms an air cavity over the bottom of the air cavity vessel to reduce frictional resistance to water.

### BACKGROUND OF THE INVENTION

In general, when a vessel sails, frictional resistance occurs between the surface of the hull and water. Such frictional resistance represents most of resistance occurring on the hull. Therefore, reducing the frictional resistance during sailing considered to be an important task.

As one of techniques for reducing frictional resistance of a vessel, the air cavity vessel is known. An air cavity vessel forms an air cavity by injecting air to a concave portion formed in the bottom of the air cavity vessel, thereby reducing a water contact surface area of the vessel.

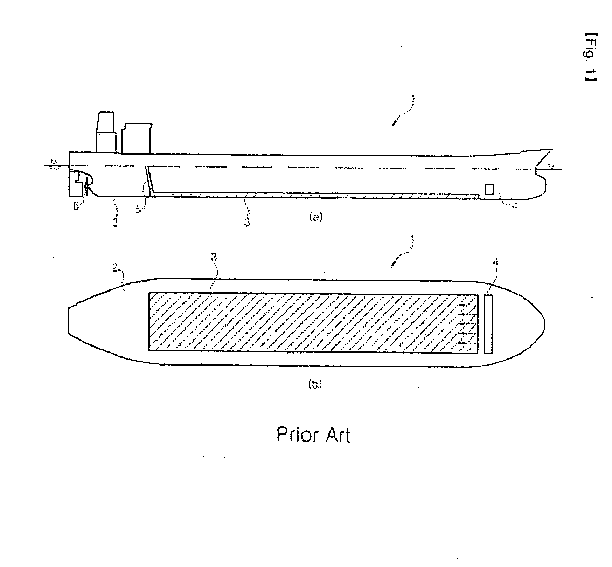

FIGS. 1A and 1B are diagrams illustrating a conventional air cavity vessel. FIG. 1A is a side view of the conventional air cavity vessel, and FIG. 1B is a bottom view of the conventional air cavity vessel.

The air cavity vessel 1 includes a concave compartment space 3 formed across the entire surface of the bottom 2 thereof and an air supply unit 4 to air to the compartment space 3 from the side thereof.

The air injected into the compartment space 3 from the air supply unit 4 forms s an air layer in the compartment space 3 and reduces frictional resistance to water during the sailing of the air cavity vessel. It is known that such an air cavity reduces frictional resistance during sailing by about 10%.

When the air cavity vessel I rolls and pitches the the air may escape the air cavity. In this case, an air layer not be formed, the resistance may be increased by the compartment space 3 formed in the bottom 2. In order to maintain the air cavity reliably, the conventional air cavity vessel may include a plurality of longitudinal and transverse partitions which are installed to partition the compartment space 3 into a plurality of compartments.

In the conventional air cavity vessel 1, however, since the air cavity is formed in the concave portion of the bottom 2, the displacement of the air cavity vessel decreases to reduce the buoyancy. Furthermore, since the design of the existing vessel needs to be significantly changed, there are difficulties in manufacturing the vessel. Therefore, there is a demand for a method capable of manufacturing an air cavity vessel without changing the design of the existing vessel significantly.

Meanwhile, when the air escaping from the compartment space 3 due to the sailing speed of the air cavity vessel reaches a propeller 6 positioned at the stem of the air cavity vessel, the air may have a bad effect upon the propeller 6. For example, the air may unstabilize the thrust and torque of the propeller 6. To solve such a problem, an air outlet 5 is installed in the rear side of the compartment space 3 such that the air escaping from the compartment space 3 is discharged to the surface of the water before reaching the propeller 6.

However, the air escaping from the compartment space 3 is not discharged to the surface of the water through the air outlet 5, but may be induced to the air supply unit 4. In this case, it is possible to considerably reduce the power consumption of an air compressor included in the air supply unit 4 to supply the air.

In general, an oil pressure is used to drive the transverse partitions. In this case, however, the efficiency of hydraulic control may be reduced and the inside of the air cavity vessel may be polluted by the leakage of oil. When a hydraulic system is installed, it may increase the weight of the air cavity vessel. Accordingly, since the power consumption of the air cavity vessel increases, it is highly likely that the energy is ineffectively used.

Korean Patent Laid-open Publication No. 10-2009-0116087 discloses an air cavity vessel having longitudinal transverse partitions which are installed in a grid on the bottom of the air cavity vessel and by which a plurality of space areas are formed. Each of the space areas has an air layer formed therein. In the air cavity vessel, however, large resistance occurs to the fixed transverse partitions.

Korea Patent Laid-open Publication No. 10-2005-0016869 also discloses an air cavity vessel. The air cavity vessel includes fixed partitions. Therefore, it is to control the transverse partitions depending on the operation situations of the air cavity vessel. As a result, the resistance and power consumption inevitably increase.

Patent Publication No. 84/04903 is considered to be the closest prior art and discloses a vessel with an adjustable draught, in which a recess is formed on the bottom side and a flap is mounted in the recess which is operated by driving the in a vertical direction with to the bottom side. In order to form the recess in the existing vessel, design changes and additional operations are required. Therefore, the time and cost required for manufacturing the vessel inevitably increases. Furthermore, when the flap is in the working position, the friction between the vessel and the water becomes so that the operation speed of the vessel decreases and the fuel consumption considerably increases. Furthermore, the flap is integrally moved between the working position and the rest position. Therefore, when the flap is applied to a large vessel, the size of the entire flap may be increased. Then, the weight of the vessel and the friction with the water may increase. In this case, the flap may be bent, and a large amount of power is required for operating the flap.

### SUMMARY OF THE INVENTION

The present invention relates to an air cavity vessel as defined by the appended claims.

In particular, an embodiment of the present invention is directed to an air cavity which is capable of reducing frictional resistance the of the air cavity vessel by using a simple without design for an air cavity vessel.

Another of the present invention is directed to an air cavity vessel its of reducing power required by an air compressor which air to an air cavity.

Another of the present invention is directed to an air cavity vessel which a measurement system for measuring the thickness of an air cavity, monitors whether a proper air cavity vessel is formed or not during the sailing of the air cavity vessel, and supplies a proper amount of air.

Another of the present invention is directed to an air cavity vessel which moves transverse compartment members by using compressed air, an electromagnet, or an electromagnet and a permanent magnet, a circulating flow by forming a proper vortex in the rear side of the transverse compartment members, and supplies air to the circulating flow to form a proper air cavity, in order to reduce power consumption when the air cavity vessel sails or is docked.

Another embodiment of the present invention is directed to an air cavity vessel which is capable of reducing vortex resistance by properly moving transverse compartment members.

Another embodiment of the present invention is directed to an air cavity vessel which is capable of reducing frictional resistance caused by an air cavity by differentially supplying air to space areas formed on the bottom of the air cavity vessel, and capable of minimizing power required for supplying the air.

Another embodiment of the present invention is directed to an air cavity vessel includes water sealing members which are installed on movable transverse compartment members to prevent water from being introduced into a plurality of space areas for an air cavity such that the air cavity may be effectively formed in the space areas.

Another embodiment of the present invention is directed to an air cavity vessel which includes concave portions formed in the bottom of the air cavity vessel so as to house transverse compartment members moved to a retreat position.

Another embodiment of the present invention is directed to an air cavity vessel which includes a hydraulic system having a simple structure for moving transverse compartment members.

Another embodiment of the present invention is directed to an air cavity vessel which stably supplies air to space areas for forming an air cavity such that a proper air cavity may be maintained even when rolling or pitching occurs during the sailing of the air cavity vessel, and improves the durability of air supply facilities.

Another embodiment of the present invention is directed to an air cavity vessel which is capable of preventing sea creatures such as barnacles from adhering to the bottom of the air cavity vessel or movable compartment members inside space areas formed on the bottom, thereby reducing frictional resistance which may be caused by sea creatures.

According to an aspect of the present invention, an air cavity vessel includes: an air compressor compressing air which is injected to form an air layer in space areas formed on the bottom of the air cavity vessel; a plurality of air valves supplying the air compressed by the air compressor to the respective space areas formed on the bottom; and a header installed between the air compressor and the air valves and containing the compressed air.

The air cavity vessel may further include an air storage container installed between the air compressor and the header and storing the compressed air.

The space areas may be formed by a plurality of compartment formation members attached to the bottom surface of the air cavity vessel.

Air may be differentially supplied to the space areas formed on the bottom of the air cavity vessel.

The space areas may be formed by at least one or more compartment formation members attached to the bottom surface of the air cavity vessel.

For both side surfaces of the respective space areas positioned in a longitudinal direction on the bottom of the air cavity vessel, an air supply amount may decrease from the space area positioned in the stem side of the air cavity vessel toward the space area positioned in the stem side of the air cavity vessel.

For the respective space areas positioned in a longitudinal direction on the bottom of the air cavity vessel, an air supply amount may decrease from the space area positioned in the stem side of the air cavity vessel toward the space area positioned in the stem side of the air cavity vessel.

The air cavity vessel may further include an ultrasonic measurement system or radar measurement system measuring the thickness of the air layer within the space areas formed on the bottom of the air cavity vessel.

The ultrasonic measurement system or radar measurement system may be installed in such a manner as to measure the thickness of the air layer at the rear portion of the space area.

Stem-side ends of transverse compartment members among the compartment formation members may be supported by a hinge unit such that the transverse compartment members are turnably driven within a constant angle.

The air cavity vessel may further include a plurality of concave portions formed in the bottom of the air cavity vessel so as to house the transverse compartment members.

When the radar measurement system is installed on the deck of the air cavity vessel, a measurement pipe may be installed from the radar measurement system to the bottom of the air cavity vessel where the space areas are formed.

The measurement pipe may be installed to thorough a ballast tank installed in the air cavity vessel.

The air injected to form the air layer within the space areas formed on the bottom of the air cavity vessel may include inert gas produced by an inert gas system (IGS) mounted in the air cavity vessel.

The air cavity vessel may further include an inert gas storage container installed downstream of the IGS and storing inert gas.

The air cavity vessel may further include a regulating valve installed downstream of the inert gas storage container.

The space areas may be formed by a plurality of compartment formation members attached to the bottom surface of the air cavity vessel.

According to another aspect of the present invention, an air cavity vessel includes: an air compressor compressing air which is injected to form an air layer within space areas formed on the bottom of the air cavity vessel; an air storage container storing the air compressed by the air compressor; and a header installed downstream of the air storage container and containing the compressed air. The compressed air is supplied to the space areas formed on the bottom.

It should be understood that different embodiments of the invention, including those described under different aspects of the invention, are meant to be generally applicable to all aspects of the invention. Any embodiment may be combined with any other embodiment unless inappropriate. All examples are illustrative non-limiting.

### BRIEF DESCRIPTION OF THE DRAWINGS

FIGS. 1A and 1B are side and bottom views of a conventional air cavity vessel, respectively.
FIG. 2 is a bottom view of an air cavity vessel according to an embodiment of the present invention.
FIG. 3 is a side view of the air cavity vessel according to the embodiment of the present invention.
FIGS. 4A any 4B are side views of a transverse compartment member of the air cavity vessel according to the embodiment of the invention.
FIG. 5 is a schematic view of an air collection device of the air cavity vessel according to the embodiment of the present invention.
FIG. 6 is a diagram explaining an air supply control method in the air cavity vessel according to the embodiment of the present invention.
FIG. 7 is a schematic view of an operating unit of the transverse compartment member in the air cavity vessel according to another embodiment of the present invention.
FIGS. 8A and 8B are construction diagrams illustrating the operating unit of the transverse compartment member according to the embodiment of the present invention.
FIG. 9 is a diagram explaining a method for differentially supplying air to a plurality of space areas in the air cavity vessel according to the embodiment of the present invention.
FIGS. 10A to 10C are diagrams illustrating transverse/longitudinal compartment members and a water sealing member of the air cavity vessel according to another embodiment of the present invention.
FIGS. 11A to 11C are diagrams illustrating transverse/longitudinal compartment members and a water sealing member of the air cavity vessel according to another embodiment of the present invention, showing a case in which the transverse compartment member is divided by the longitudinal compartment member.
FIGS. 12A and 12B are diagrams illustrating an air cavity vessel concave portions according to another embodiment of the present invention.
FIGS. 13A to 13C are diagrams illustrating a case in which a measurement system for measuring an air cavity is installed in the air cavity vessel according to the embodiment of the present invention.
FIGS. 14A and 14B are schematic views of a hydraulically-operated movable compartment member of an air cavity vessel according to another embodiment of the present invention, when the movable compartment member is moved to a retreat position and a projection position, respectively.
FIG. 15 is a schematic view of an air supply system for stably supplying air to the air cavity formed over the bottom of the air cavity vessel according to another embodiment of the present invention.
FIG. 16 is a schematic view of an air supply system for stably supplying air to the air cavity formed over the bottom of the air cavity vessel according to another embodiment of the present invention.
FIG. 17 is a diagram illustrating a method for supplying inert gas to the air cavity formed over the bottom of the air cavity vessel according to another embodiment of the present invention.

### DETAILED DESCRIPTION OF THE EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

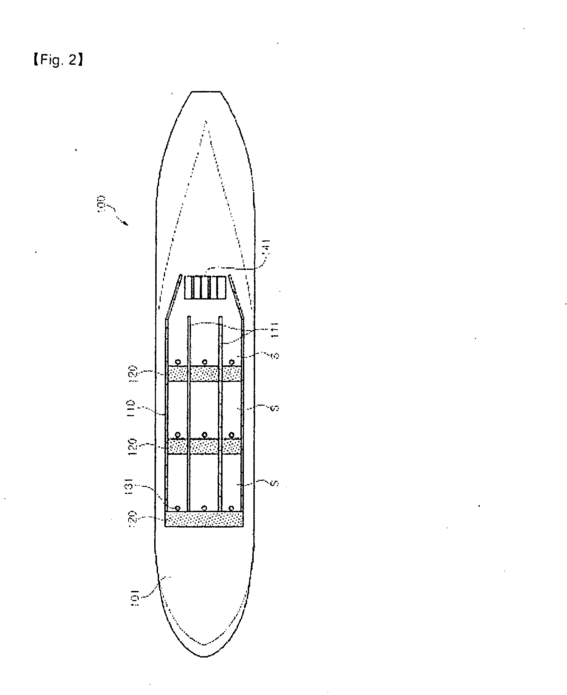

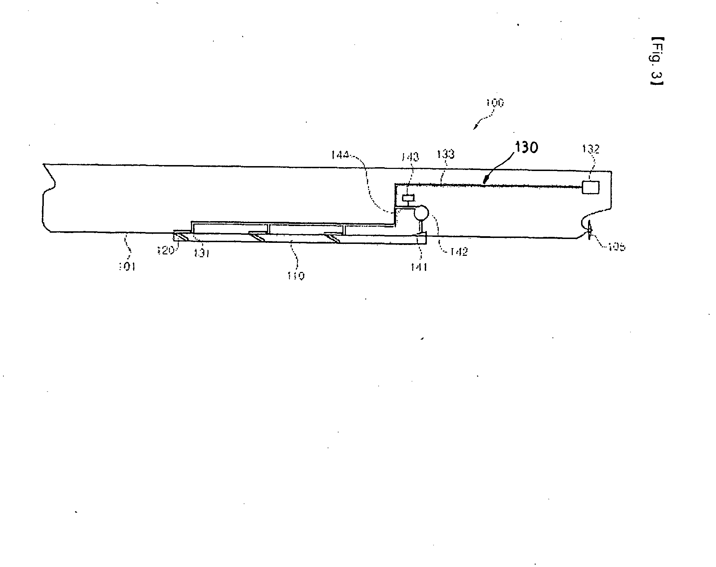

FIG. 2 is a bottom view of an air cavity vessel according to an embodiment of the present invention, FIG. 3 is a side view of the air cavity vessel according to the embodiment of the invention.

The air cavity vessel 100 according to the embodiment of the present invention includes a structure for reducing frictional resistance to water by forming an air cavity in the bottom of the air cavity vessel. The air cavity vessel 100 is constructed in such a manner that water does not come in direct contact with the bottom 101 of the air cavity vessel but comes in contact with an air layer, while the air cavity vessel 100 sails. Therefore, since the frictional resistance to the water decreases, the fuel consumption may be reduced. In general, it is known that the reduction in the fuel consumption depending on the formation of the air cavity in the air cavity vessel ranges from 5 to 15%.

The air cavity vessel 100 according to the embodiment of the present invention, is constructed in such a manner that an air cavity is formed over the surface of the bottom 101 in a state in which the surface of the bottom 101 is left as it is. Therefore, it is possible to solve a problem in the conventional air cavity vessel which requires design changes to form an air cavity in a groove hollowed out in the bottom of the air cavity vessel.

The air cavity vessel 100 includes a plurality of longitudinal compartment members 110, a plurality of longitudinal partitions 111, a plurality of transverse compartment members 120, and an air supply unit 130. The longitudinal compartment members 110, the longitudinal partitions 111, and the transverse compartment members 120 serve as compartment formation members for partitioning the bottom of the air cavity vessel to form an air cavity.

The longitudinal compartment members 110 are attached at both sides of the bottom 101, that is, the port side and the starboard side, respectively, so as to partition the bottom 101 in the longitudinal direction of the air cavity vessel. At this time, the longitudinal compartment members 110 are formed as separate members attached on the surface of the bottom 101 and projecting from the surface. Therefore, design changes of the air cavity vessel are not required.

The transverse compartment members 120 are formed to extend in the widthwise direction on the bottom 101. The transverse compartment members 120 form a plurality of space areas S for forming an air cavity in the bottom 101 through cooperating with the longitudinal compartment members 110. Since the transverse compartment member 120 are installed in the longitudinal direction so as to be spaced from each other, the plurality of space areas S are formed.

The longitudinal partitions 111 are attached the longitudinal compartment members 110 so as to project from the bottom 101, and the space areas S may be additionally divided by the longitudinal partitions 111. The longitudinal partitions 111 serve to stably maintain the air cavity even during the rolling of the air cavity vessel.

In this embodiment, it is described that the space areas S for forming the air cavity are formed by the longitudinal compartment members 110, the longitudinal partitions 11, and the transverse compartment members 120. However, other members may be added as long as they are used to form the space areas S.

Furthermore, it is described that the longitudinal compartment member 110 and the longitudinal partition 111 are discriminated from each other. The discrimination has been simply made for convenience of description. The longitudinal partition 111 has almost the same function as the longitudinal compartment member 110 in that the longitudinal partition 111 serves to partition the bottom in the longitudinal direction. Therefore, the longitudinal partition 111 may be substituted with the longitudinal compartment member 110. That is, the space areas S may be formed by the plurality of transverse compartment members 120 and only the plurality of longitudinal compartment members 110 which are installed so as to be spaced from each other in the widthwise direction on the bottom.

The air supply unit 130 serves to supply air to the space areas S formed by the longitudinal compartment members 110, the longitudinal partitions 111, and the transverse compartment members 120 such that the air cavity may be formed between the surface of the bottom 101 and the water during the sailing. The air supply unit 130 includes a plurality of air injection nozzles 131, an air compressor 132, and an air supply pipe 133. The air injection nozzles 131 serve to supply air to the respective space areas S. The air compressor 132 serves to compress the air which is to be supplied to the air injection nozzles 131. The air supply pipe 133 serves to connect the air injection nozzles 131 and the air compressor 132. Between the air compressor 132 and the air supply pipe 133, an air storage container for containing the compressed air may be additionally provided. The plurality of the air injection nozzles 131 may be disposed in the plurality of space areas S, respectively, to supply air to the space areas S.

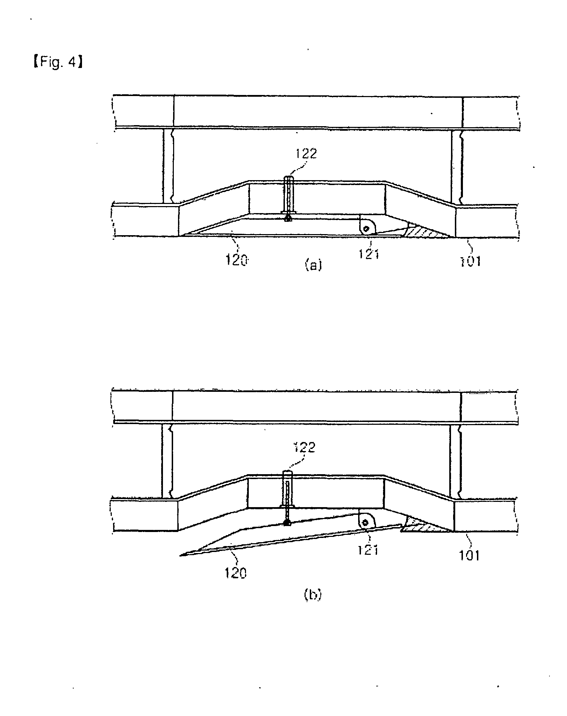

FIGS. 4A and 4B are side view of the transverse compartment member of the air cavity vessel according to the embodiment of the present invention.

When the air cavity vessel sails through stormy waves, air may escape from an air cavity due to the rolling of the air cavity vessel, which makes it difficult to form the air cavity. In this case, the air cavity may not serve to reduce frictional resistance during the sailing of the air cavity vessel, and the frictional resistance may be increased by the longitudinal compartment members 110 and the transverse compartment member 120 formed on the bottom 101 of air cavity vessel.

More specifically, since the longitudinal compartment member 110 is formed in the longitudinal direction of the air cavity vessel, it has a small effect upon the frictional resistance. However, the transverse compartment member 120 comes in contact with the water squarely, while the air cavity vessel sails. Therefore, the transverse compartment member 120 may increase the frictional resistance.

Considering this, the transverse compartment member 120 may be constructed in such a manner as to move between a retreat position and a projection position. The retreat position refers to a position where the transverse compartment member 120 is retreated at the same level as the surface of the bottom 101, and the projection position refers to a position where the transverse compartment member 120 is projected from the surface of the bottom 101. Therefore, when it is difficult to form an air cavity, for example, when the air cavity vessel sails through stormy waves, the transverse compartment member 120 may be moved to the retreat position to reduce an increase in frictional resistance which may occur when the transverse compartment member is projected from the bottom.

FIG. 4A illustrates a state in which the transverse compartment member 120 is moved to the retreat position. The bottom 101 of the air cavity vessel may include a concave portion which is formed so as to be internally curved along the widthwise direction, and the transverse compartment member 120 moved to the retreat position may be housed in the concave portion.

When the air cavity is to be formed, the transverse compartment member 120 is projected from the surface of the bottom 101 to move to the projection position, as illustrated in FIG. 4B. At this time, the transverse compartment member 120 is turned about a hinge shaft 121 from the retreat position to the projection position. The hinge shaft 121 extends in the widthwise direction in the bottom 101. The hinge shaft 121 is positioned at the front end (the stem side) of the transverse compartment member 120. Therefore, when the transverse compartment member 120 is moved to the projection position, the rear end of the transverse compartment member 120 is projected, but the front end of the transverse compartment member 120 maintains a similar level to the surface of the bottom 101. Accordingly, the transverse compartment member 120 is moved to the projection position, a smooth streamline is formed along the transverse compartment 120, thereby reducing the frictional resistance to the water. The projection level of the transverse compartment member 120 may be controlled in the range of 0.3 m to 2.0 m.

The transverse compartment member 120 may be moved between the retreat position and the projection position by a hydraulic system or electrically powered system. For example, the transverse compartment member 120 may be turned about the hinge shaft 121 by a hydraulic jack 122.

The formation of the air cavity is affected by the sailing speed of the air cavity vessel and the projection level of the transverse compartment member 120. The transverse compartment member 120 according to the embodiment of the present invention is constructed in such a manner that the projection level from the surface of the bottom 101 may be controlled. Therefore, it is possible to provide various stages of levels suitable for the sailing speed of the air cavity vessel.

As described above, the conventional air cavity vessel includes the groove hollowed out in the bottom to form the air cavity. In the air cavity vessel according to the embodiment of the present invention, however, the air cavity is formed in the space areas formed by the longitudinal compartment members 110 and the transverse compartment members 120 which are attached to the surface of the bottom 101, in a state in which the bottom 101 is left as it is. Therefore, the air cavity vessel may be manufactured without design changes for the existing vessel. Accordingly, it is possible to considerably reduce time, effort, and cost required for manufacturing the air cavity vessel.

Furthermore, since the transverse compartment member 120 may be moved between the retreat position and the projection position depending on the sailing situations of the air cavity vessel, it is possible to substantially prevent an increase in frictional resistance of the air cavity vessel in a situation in which the air cavity is difficult to form.

Furthermore, when the transverse compartment member 120 is moved to the projection position, the projection level thereof may be controlled. Therefore, it is possible to form a proper air cavity depending on the sailing speed of the air cavity vessel.

In this embodiment, it has been described that the transverse compartment member 1 20 is constructed in a folding manner. However, the transverse compartment member 120 may not be constructed in a folding manner, but may be simply attached to the bottom 101 so as to project from the bottom 101, like the longitudinal compartment member 110.

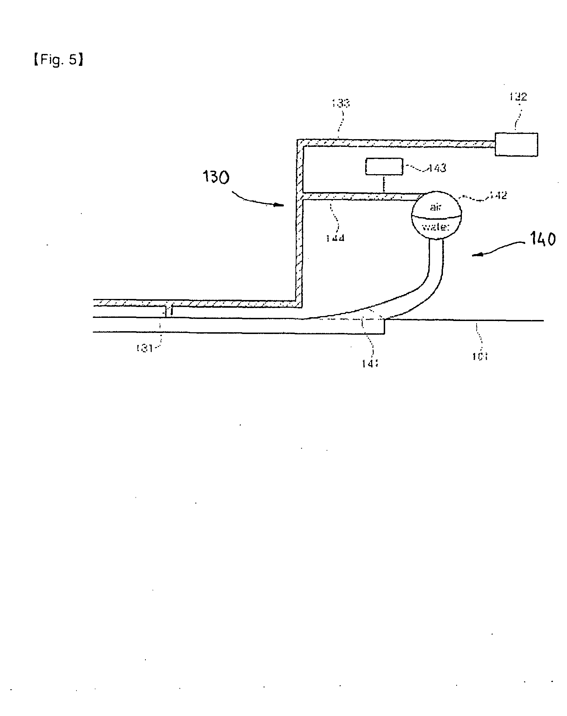

FIG. 5 is a schematic view of an air collection device of the air cavity vessel according to the embodiment of the present invention. Hereinafter, referring to FIGS. 3 to 5, the construction of the air collection device will be described.

Due to the sailing speed of the air cavity vessel, air may escape from the space having the air cavity formed therein. In this case, when the air reaches the propeller 105 positioned at the stem of the air cavity vessel, the air may have a bad effect upon the propeller 105 and destabilize the thrust and torque of the propeller 105. Therefore, the air escaping from the space areas needs to be absorbed before reaching the propeller 105.

The air cavity vessel 100 according to the embodiment of the present invention includes the air collection device 140 provided in the stem side thereof. The air collection device collects the air escaping from the air cavity formed in the space areas and supplies the collected air to the air injection nozzle 131.

The air collection device 140 includes an air suction port 141, a gas/liquid separator 142, an air compressor 143, and a connection pipe 144.

The air suction port 141 is installed in the stern side of the air cavity vessel 100 to suck the air escaping from the space areas. The air suction port 141 is connected to the gas/liquid separator 142 from the surface of the bottom 101. Since water as well as the air is sucked through the air suction port 141, the gas/liquid separator 142 separates the air from the water. The gas/liquid separator 142 is installed at a position which is higher by 5 cm, for example, than the surface of the bottom 101. Therefore, the air is to the gas/liquid separator 142 through the air suction port 141 by a pressure difference, without a separate power supply.

The water separated by the gas/liquid separator 142 is discharged to the outside, and the air is compressed by the air compressor 143 and then supplied to the air injection nozzle 131 through the connection pipe 144. The air compressor 143 is a device for compressing the air separated by the gas/liquid separator 142 and then supplying the compressed air to the air infection nozzle 131 through the connection pipe 144. The air compressor 143 may include a compressor or pump. The connection pipe 144 connects the gas/liquid separator 142 and the air supply pipe 133, and serves as a path through which the air separated by the gas/liquid separator 142 moves.

For example, when it is assumed that the pressure at the surface of the bottom 101 is about 2 bar (gauge pressure), the pressure of the air separated by the gas/liquid separator 142 becomes about 1.5 bar. That is because, since the level of the gas/liquid separator 142 is installed at the position higher than that of the surface of the bottom 101, the water head thereof is lower by several meters than that of the surface of the bottom 101. In order for the air compressor 132 to supply air through the air injection nozzle 131, the air needs to be compressed at a pressure of 2 bar or more. However, the air separated by the gas/liquid separator 142 already has a pressure of 1.5 bar. Therefore, when only a pressure of 0.5 bar is applied to the air by the air compressor 143, the air may be supplied to the air injection nozzle 131 through the connection pipe 144 and the air supply pipe 133.

The air compressor 132 requires a large amount of power to continuously compress the air at a pressure of 2 bar or more. In the conventional air cavity vessel, the air escaping from the air cavity vessel is absorbed and discharged to the surface of the water. In the embodiment of the present invention, however, the air separated by the gas/liquid separator 142 is not discharged to the outside, but only a pressure of 0.5 bar is applied to recirculate the air to the air injection nozzle 131 through the air supply pipe 133. Therefore, since the air compressor 132 may compress a smaller amount of air, it is possible to considerably reduce the power required for compressing the air.

As described above, the air collection device 140 according to the embodiment of the present invention sucks the air escaping from the space areas and substantially prevents the air from having a bad effect upon the propeller 105 when the air reaches the propeller 105. Furthermore, the air separated by the gas/liquid separator 142 is recirculated at a low pressure and supplied to the air injection nozzle 131. Therefore, it is possible to considerably reduce the power required for compressing the air.

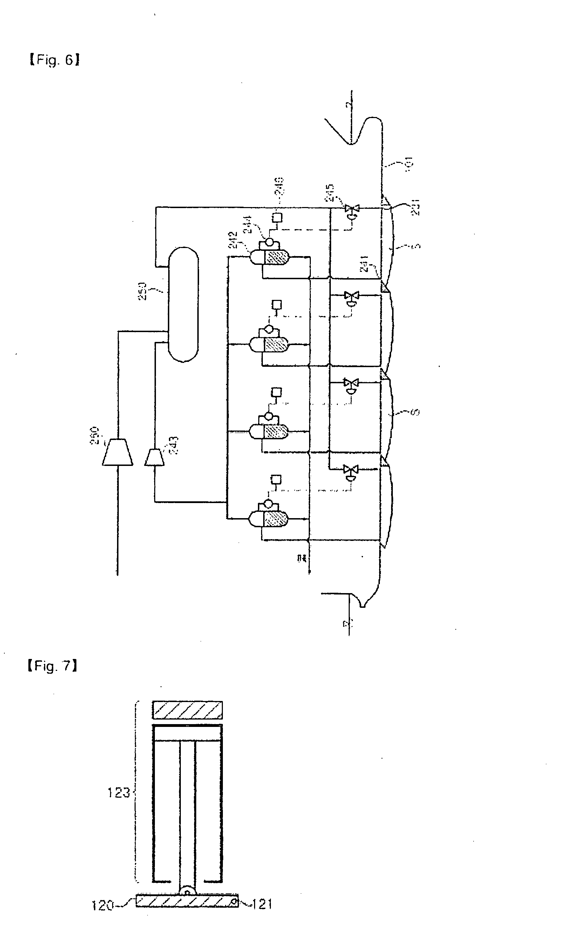

FIG. 6 is a diagram illustrating an air supply control method in the air cavity vessel according to the embodiment of the present invention.

As described above, the air cavity vessel forms the air cavity to reduce the frictional resistance to water. Therefore, it is important to monitor whether the air cavity is properly formed or not, during the sailing of the air cavity vessel.

In the conventional air cavity vessel, the air cavity is formed in the groove hollowed out in the bottom. Therefore, whether the air cavity is formed or not and the thickness of the air cavity may be monitored by simply measuring the level of the water inside the groove. In the embodiment of the present invention, however, the surface of the bottom 101 is left as it is, and the air cavity is formed over the bottom 101. Therefore, it is not easy to use a method in which a projection is installed on the bottom to measure the water level.

In the embodiment of the present invention, the water or air is sucked from the plurality of space areas S having the air cavity formed therein, and the gas/liquid separator 242 separates the air and the water from each other. Then, the level of the separated water is measured to monitor whether the air cavity is formed or not and the thickness of the air cavity.

First, air or water is sucked through the air suction port 241 positioned at the rear side (stern side) of each space area S. The sucked air or water is separated into water and air by the gas/liquid separator 242. Since the gas/liquid separator 242 is located at a higher position than the surface of the bottom 101, the air or water is sucked to the gas/liquid separator 242 through the air suction port 241 by a pressure difference, without a separate power supply.

The gas/liquid separator 242 determines a ratio of the sucked air and water by using a sensor. For example, a water level sensor 244 may be used to measure the water level inside the gas/liquid separator 242 to determine the ratio of water to gas. When the air cavity is normally formed in the space area S, the ratio of air in the gas/liquid separator 242 increases. On the other hand, when the air cavity is not normally formed in the space area S, the ratio of water in the gas/liquid separator 242 increases.

A control unit 246 controls an amount of air to be supplied to the space area S through the air injection nozzle 231, depending on the water level measured by the water level sensor 244. For example, when it is determined that the ratio of air in the space areas is low, the control unit 246 controls the opening rate of an air valve 245 installed at the previous stage of the air injection nozzle 231 to additionally supply air. The air valve 245 receives a signal from the water level sensor 244 such that the opening rate thereof may be automatically controlled by the control unit 246.

The air separated by the gas/liquid separator 242 is compressed by a recirculation air compressor 243 and stored in an air storage container 250. At this time, the air stored in the air storage container 250 has a pressure of 2 bar or more such that the air may be supplied to the space area S through the air injection nozzle 231. Furthermore, the air separated by the gas/liquid separator 242 already has a pressure of 1.5 bar. Therefore, when the recirculation air compressor 243 applies only a pressure of 0.5 bar to the air, the air may be stored in the air storage container 250. Here, the recirculation air compressor 243 may include a compressor or pump.

The air storage container 250 is connected to an air compressor 260 for compressing the air which is to be supplied to the space area S through the air injection nozzle 231.

In the above-described air supply control method, air or water is sucked through the air suction port 241 installed in the rear side of the space area S and separated by the gas/liquid separator, and the ratio of air to water is determined by the water level sensor 244 installed in the gas/liquid separator 242. By controlling the opening rate of the air valve 245 connected to the air injection nozzle 231 according to the determination value of the water level sensor 244, it is possible to an amount of air, which is suitable for forming an air cavity, to the space area S.

Furthermore, the air separated by the gas/liquid separator 242 has a pressure higher than the atmospheric pressure. Therefore, when only a proper amount of pressure, for example, a pressure of 0.5 bar is additionally supplied by the recirculation air compressor 243, the air may be stored in the air storage container 250. Accordingly, it is possible to considerably reduce the power required by the air compressor 260.

The air supply control method of the air cavity vessel according to the embodiment of the present invention is applied to the air cavity vessel in which the space areas for the air cavity are formed by the compartment formation members attached on the bottom of the air cavity vessel so as to project from the bottom, in a state in which the bottom is left as it is. However, the air supply control method may be applied to the conventional air cavity vessel having the air cavity formed in the groove of the bottom.

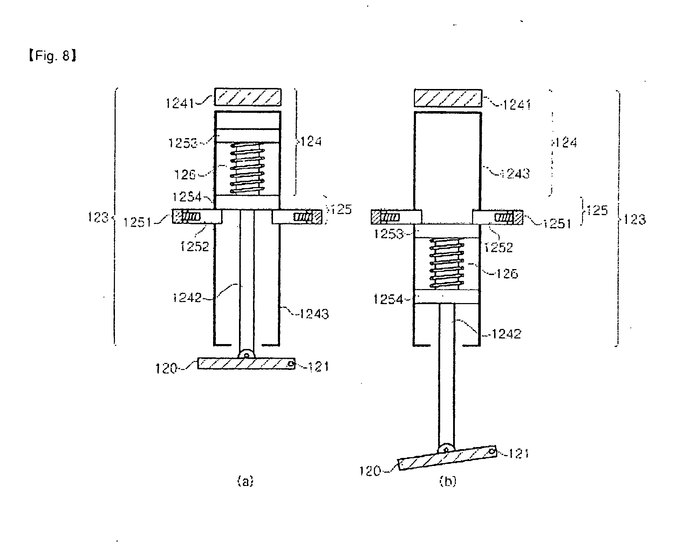

FIG. 7 is a schematic view of a movable compartment member in the air cavity vessel according to another embodiment of the present invention. FIGS. 8A and 8B are diagrams explaining the operation of the movable compartment member in detail. FIG. 4 illustrates the transverse compartment member of the air cavity vessel using a hydraulic jack, but FIGS. 7 and 8 illustrate a case in which a transverse compartment member serving as the movable compartment member is driven by an operating unit.

A hydraulic system may be used to drive the transverse compartment member. In that case, however, the efficiency of hydraulic control may be reduced and the inside of the vessel may be polluted by the leakage of oil. When the hydraulic system is installed, it may increase the weight of the air cavity vessel. Accordingly, since the power consumption of the air cavity vessel increases, it is highly likely that the energy is ineffectively used.

To solve such a problem, the air cavity vessel 100 according to the embodiment of the present invention includes a transverse compartment member 120, an operating unit 123, and a hinge unit 121, with reference to FIG. 7.

Referring to FIG. 8, the operating unit 123 may include a driving device 124 for driving the transverse compartment member 120 and a fixing device 125 for fixing the transverse compartment member 120.

The driving device 124 includes a driving operation mechanism 1241, a driving rod 1242, and a cylinder 1243, and the fixing device 124 includes a fixing operation mechanism 1251, a fixing rod 1252, an upper stopper 1253, and a lower stopper 1254.

When a magnetic force is used, the stoppers 1253 and 1254 and the fixing rod 1252 may be formed of a material attracted to the magnetic force. When compressed air is used, there is no limitation.

The driving rod 1242 may be connected to an arbitrary position of the transverse compartment member 120 by welding or the like.

The hinge unit may be implemented as a shaft 121. At this time, the transverse compartment 120 is turned about the hinge shaft 121, which extends in the widthwise direction on the bottom 101, from a retreat position to a projection position. The hinge shaft 121 is positioned at the front end (stem side) of the transverse compartment member 120. The rear end of the transverse compartment member 120 is projected at the projection position, but the front end of the transverse compartment member 120 maintains a similar to the surface of the bottom 101.

Hereinafter, the operations of the respective component depending on sailing situations will be described, and the following descriptions will be focused on a case in which an electromagnet is used as an operational source of the driving operation mechanism and the fixing operation mechanism.

However, it will be understood by those skilled in the art that, although compressed air or a permanent magnet and an electromagnet is or are used, the driving rod 1242 may be vertically reciprocated, or the fixing rod 1252 may be advanced and retreated.

When the compressed air is used as an operational source of the driving operation mechanism 1241, the transverse compartment member 120 may not move downward due to the compressed air existing in the cylinder, even though the weight of the transverse compartment member 120 is applied. In this case, the compressed air may be discharged or collected to move the transverse compartment member 120 downward.

Furthermore, when the permanent magnet and the electromagnet are used as an operational source of the driving operation mechanism 1241, the permanent magnet may be installed at the upper stopper 1253. In this case, when facing magnetic poles of the electromagnet and the permanent magnet are N and S (or S and N) poles, respectively, the transverse compartment member 120 will be lifted. When the facing magnetic poles of the electromagnet and the permanent magnet are N and N (or S and S) poles, respectively, the transverse compartment member 120 will be lowered.

That is, when the direction of current inputted to the driving operation mechanism 1241 is changed, the magnetic pole of the electromagnet may be twitched from N pole to S pole (or from S pole to N pole) to operate the transverse compartment member 120.

Even when an electromagnet and a permanent magnet are used as an operational source of the fixing operation mechanism 1251, the operation of the fixing operation mechanism 1251 is performed in the same manner as the operation of the driving operation mechanism 1241.

Furthermore, when compressed air is used as an operational source of the driving operation mechanism 1241, the following situation needs to be considered. That is, as the position of the driving rod 1242 connected to the transverse compartment member 120 approaches the hinge shaft 121, a force to lift the transverse compartment member 120 may increase. Therefore, the position needs to be determined carefully.

However, when the electromagnet is used as an operational source of the driving operation mechanism 1241, the force to lift the transverse compartment member 120 increases as the position of the driving rod 1242 connected to the transverse compartment member 120 recedes from the hinge shaft 121. This is because the movement distance of the driving rod 1242 increases. In this case, since a distance upon which the magnetic force of the electromagnet has an effect may also increase, a larger amount of current needs to be supplied.

Therefore, when the operational source of the driving operation mechanism 1241 is determined, the connection position of the driving rod 1242 to the transverse compartment member 120 needs to be considered together, in order to meet such demands as durability increase and power reduction.

First, the operation of the transverse compartment member 120 according to when the sailing of the air cavity vessel is stopped or the use of the transverse compartment member 120 is unnecessary will be described.

When the sailing of the air cavity vessel is stopped or the use of the transverse compartment member 120 is unnecessary, the lower stopper 1254 is fixed by the fixing rod 1252, as illustrated in FIG. 8A. Therefore, the transverse compartment member 120 is fixed at the retreat position. At this time, a current does not flow in the driving operation mechanism 124 using the electromagnet.

However, when the use of the transverse compartment member 120 is required during the sailing of the vessel, a current is applied to the fixing operation mechanism 1251 using the electromagnet, and the fixing rod 1252 is retreated. At this time, since a current does not flow in the driving operation mechanism 1241 using the electromagnet, the transverse compartment member 120 moves downward due to its weight.

When the transverse compartment member 120 reaches the projection position, the current flowing in the fixing operation mechanism 1251 using the electromagnet is cut off. Then, the fixing rod 1252 is advanced to fix the upper stopper 1253. As a result, the transverse compartment member 120 is fixed at the projection position, as illustrated in FIG. 8B.

When the sailing of the vessel is to be stopped or the use of the transverse compartment member 120 becomes unnecessary, a current is applied to the fixing operation mechanism 1251 and the driving operation mechanism 1241. Then, when the fixing rod 1252 is retreated, the transverse compartment member 120 is lifted by the driving operation mechanism 1241 using the electromagnet.

When the transverse compartment member 120 reaches the retreat position, the current flowing in the fixing operation mechanism 1251 using the electromagnet is cut off. Then, the fixing rod 1252 is advanced to fix the lower stopper 1254, as illustrated in FIG. 8A. As a result, the transverse compartment member 120 is fixed at the retreat position.

An operator determines whether the transverse compartment member 120 reaches the retreat position or the projection position, and drives the fixing operation mechanism 1251 or the driving operation mechanism 1241. However, in order to automate the operation, a limit switch may be installed at the movement limit positions of the upper and lower stoppers 1253 and 1254 inside the cylinder 1243. When a signal is received from the limit switch, the fixing rod 1252 may be automatically operated to drive or fix the transverse compartment member 120.

Furthermore, a spring 126 may be installed between the upper and lower stoppers 1253 and 1254. In this case, the spring 126 may reduce the frictional resistance to the water, which occurs when the transverse compartment member 120 is moved to the projection position during the sailing of the vessel. Accordingly, it is possible to increase the fuel efficiency of the air cavity vessel and the durability of the transverse compartment member 120 and the rods 1242 and 1252.

Furthermore, various stages of stoppers may be installed in the rods. In this case, the operator may control the movement of the transverse compartment member 120 with precision by using the various stages of stoppers.

In order to automate the driving operation, limit switches may be installed at the respective movement positions of the stoppers inside the cylinder 1243. When a signal is received from the limit switches, the fixing rod 1252 may be automatically operated to drive or fix the transverse compartment member 120.

The operation mechanisms using the electromagnet receive a driving voltage from a power supply (not shown) inside the air cavity vessel. In this case, the polarity of the driving voltage from the power supply may be switched by a converter. The converter may include an SCR converter.

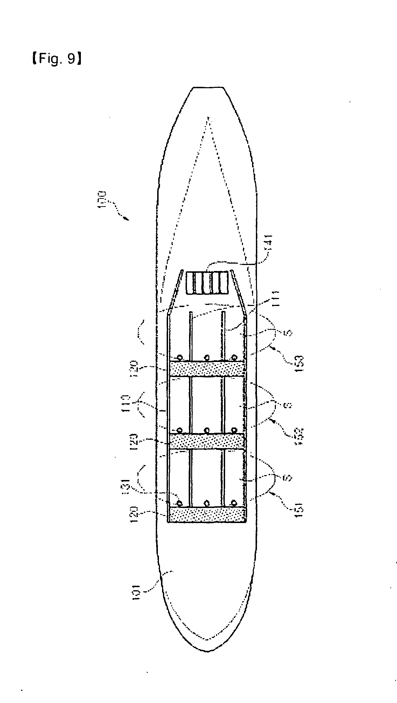

FIG. 9 is a diagram illustrating a method for differentially supplying air to the plurality of space areas in the air cavity vessel according to the embodiment of the present invention.

In the air cavity vessel, the power consumed in supplying air to form an air cavity causes additional fuel consumption, besides the fuel consumption required for operating the air cavity vessel. Therefore, a power reduction effect of the air cavity vessel may decrease.

Considering this, a method capable of supplying an optimal amount of air to each of the space areas may be used to form the air cavity of the air cavity vessel. In this case, it is possible to considerably reduce the power consumption of the air cavity vessel.

In order to form an air cavity with a large area on the flat bottom of the air cavity vessel, the plurality of transverse compartment members are installed on the bottom to form the plurality of space areas. The transverse compartment members are spaced from each other in the longitudinal direction. FIG. 9 illustrates a case in which three space areas 151 to 153 are formed at the stem and stem of the air cavity vessel and between the stem and stern of the air cavity vessel, respectively.

When longitudinal partitions 111 are attached inside the longitudinal compartment members 110, a plurality of spaces areas may be additionally formed. In FIG. 9, two longitudinal partitions 111 are installed, and thus nine space areas are formed in a grid pattern.

The air cavity vessel of FIG. 9 includes the transverse compartment members 120 which are capable of forming an air cavity while inducing a vortex, the longitudinal compartment members 110 which suppress the air leakage from the air cavity, and the longitudinal partitions 111 which suppress the air leakage during the rolling of the hull. In order to form the air cavity, compressed air is supplied to the respective space areas through the air injection nozzles installed at the rear side of the transverse compartment members 120 on the bottom of the air cavity vessel.

At this time, a predetermined amount of air required for forming air cavities in the respective space areas at the stem side is supplied to the space areas. When the pattern of the air cavities formed in the respective space areas is analyzed, it may be seen that the pattern of the air cavities is formed in an inverted U shape in which the air cavities formed at both sides have a larger length than the air cavity formed in the center.

Such a phenomenon occurs because the air leaks from the stern-side edges of the longitudinal compartment members 110, which are provided at both sides of the transverse space area 151 in the stem side, to the rear side of the hull along the longitudinal compartment members 110.

Of the air within the space areas positioned at both sides of the transverse space area 151 in the stem side, the air leaking to the rear side of the hull is reintroduced to both sides of the transverse space area 152 provided between the stem side and the stern side by a vortex flow formed at both sides in the rear side of the transverse compartment member 120 provided between the stem side and the stern side.

As a result, the air introduced to both sides of the transverse space area 152 provided between the stem side and the stem side from the space areas positioned at both sides of the transverse space area 151 in the stem side contributes to forming the air cavities in the space areas positioned at both sides of the transverse space area 152. Therefore, although a smaller amount of air is supplied to the space areas positioned at both sides of the transverse space area 152 than the space areas positioned at both sides of the transverse space area 151 in the stem side, the air cavities may be formed in the space areas positioned at both sides of the transverse space area 152.

Furthermore, the air supplied to the space areas positioned at both sides of the transverse space area 152 between the stem side and the stem side is introduced into the space areas positioned at both side of the transverse space area 153 in the stern side along the longitudinal compartment member 110. Therefore, although a smaller amount of air is supplied to the space areas positioned at both sides of the transverse space area 153 in the stern side than the space areas positioned at both sides of the transverse space area 152 between the stem side and the stern side, the air cavities may be formed in the space areas positioned at both sides of the transverse space area 153.

Therefore, although the air supply amount is gradually reduced from the space areas positioned at both sides of the transverse space area 151 in the stem side toward the space areas positioned at both sides of the transverse space area 153 in the stern side, proper air cavities may be formed. Therefore, the consumption of power required for supplying air may be reduced, which makes it possible to reduce the fuel consumption of the air cavity vessel.

Depending on the sailing situations of the air cavity vessel, the air supply amount may be reduced by 40 to 80% from the space areas positioned at both sides of the transverse space area 151 in the stem side toward the space areas positioned at both sides of the transverse space area 153 in the stern side.

As described above, the air supply amounts in the space areas positioned at both sides among the space areas of the respective transverse space areas 151 to 153, which are arranged in the transverse direction, are gradually reduced from the space areas in the stem side toward the space areas in the stem side. Furthermore, the air supply amounts in the space areas of the respective transverse space areas 151 to 153, which are arranged in the transverse direction, may be reduced from the transverse space area 151 in the stem side toward the transverse space area 153 in the stem side.

Furthermore, the air supply amounts in the respective space areas arranged in the longitudinal direction on the bottom of the air cavity vessel need to be reduced from the space areas in the stem side toward the space areas in the stem side.

During the sailing of the air cavity vessel, the air flowing out of the space areas in the stem side may be introduced to the space areas in the rear side of the hull, depending on unexpected situations such as rolling or requirements for the vessel operation. Therefore, the air supply amounts in the space areas arranged in the longitudinal direction as well as the air supply amounts in the space areas positioned at both sides among the space areas of the respective transverse space areas 151 to 153, which are arranged in the transverse direction, need to be reduced from the space areas in the stem side toward the space areas in the stern side.

The above-described air supply method may be applied to the air cavity vessel which forms the air cavity in the groove hollowed out in the bottom thereof as well as the air cavity vessel which forms the air cavity in the space areas formed by the longitudinal/transverse compartment members attached to the bottom thereof and projecting from the bottom.

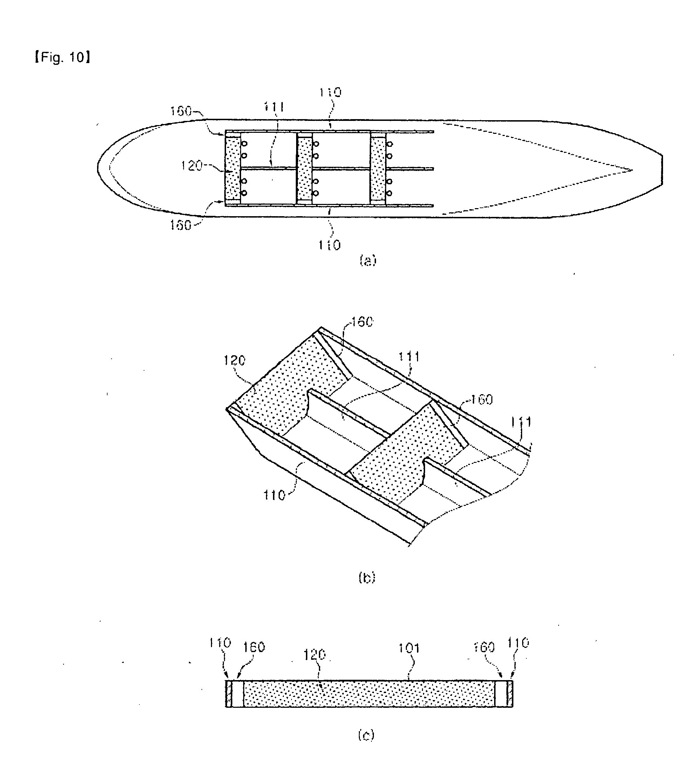

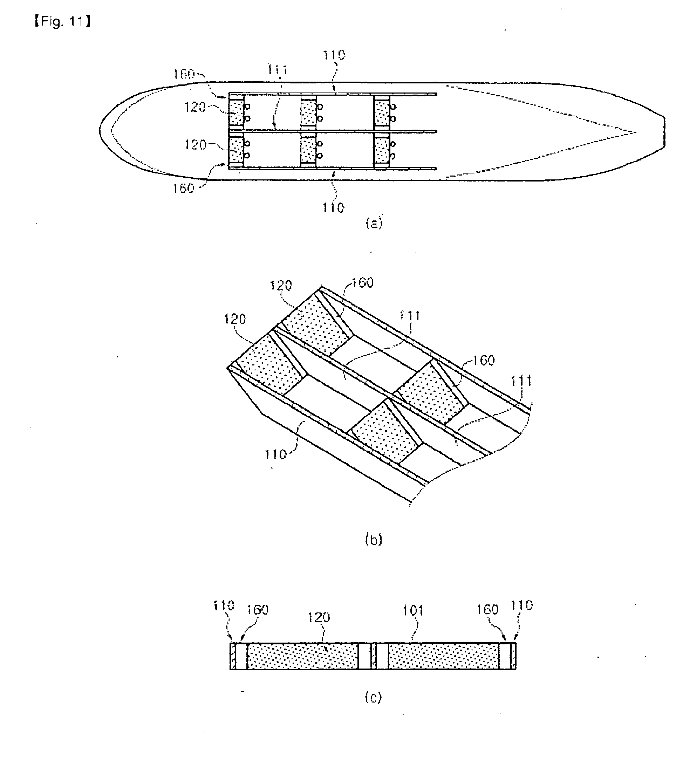

FIGS. 10 and 11 are diagrams illustrating transverse/longitudinal compartment members and a water sealing member of the air cavity vessel according to another embodiment of the present invention. FIGS. 10A and 11A are plan views of the bottom of the air cavity vessel. FIGS. 10B and 11B are perspective views of the bottom of the air cavity vessel. FIGS. 10C and 11C are front views of the bottom of the air cavity vessel.

FIGS. 10B and 10C illustrate a case in which the transverse/longitudinal compartment members are attached to the surface of the bottom 101 and the transverse compartment members 120 are projected at a predetermined angle to form space areas for air cavities. However, the embodiment of the present invention may also be applied to the air cavity vessel in which the groove is hollowed out in the bottom 101, the air cavity is formed in the groove, and the transverse compartment members 120 are driven at a predetermined angle.

When the movable transverse compartment members 120 are used in the air cavity vessel, water may be introduced into the space areas having the air cavity formed therein, through a gap between the transverse compartment member 120 and the longitudinal compartment member 110. Therefore, the water sealing member capable of sealing the gap is needed in order to increase the formation efficiency of the air cavity.

FIG. 10 illustrates a case in which only one longitudinal partition 111 is installed on the bottom 101 to form the space areas for an air cavity. However, a plurality of longitudinal partitions 111 may be installed.

Referring to FIG. 10, the air cavity vessel according to the embodiment of the present invention includes the transverse compartment members 120, the longitudinal compartment members 110, and the water sealing members 160.

Hereinafter, the respective members will be described in detail.

When the transverse compartment member 120 is projected from the flat bottom 101, a vortex flow deviating from the longitudinal end of the transverse compartment member 120 is induced, while the water flow passes along the surfaces of the bottom 101 and the transverse compartment member 120.

Accordingly, a local circulating flow is formed in the rear side of the transverse compartment member 120. When air is supplied to the circulating flow, an air cavity is formed. At this time, if a longitudinal gap exists between the transverse compartment members 120 and the longitudinal compartment member 110, the water may be introduced into the space area having the air cavity formed therein. As a result, the air cavity formation by the air supplied to the space area may not be performed effectively due to the introduced water.

To prevent the water from being introduced through the gap in the longitudinal direction, the water sealing member is installed between the transverse compartment member 120 and the longitudinal compartment member 110. When the transverse compartment 120 reaches the projection position from the retreat position, the water sealing member 120 blocks the water in the front side of the transverse compartment member 120 from being introduced to the rear side of the transverse compartment member 120. Therefore, it is possible to reliably maintain the air cavity formed in the space area of the bottom 101.

Furthermore, when the water sealing member 160 is formed of or coated with a material having a pollution-proof property and a high elasticity, the water sealing performance may not only be improved, but pollutants may also be prevented from adhering.

The water sealing member 160 may be formed of plastic, rubber, or metal.

The water sealing member 160 may be installed on the transverse compartment member 120. In this case, the water sealing member 160 may be provided integrally with the transverse compartment member 120, or provided detachably from the transverse compartment member 120. When the water sealing member 160 is installed detachably from the transverse compartment member 120, the water sealing member 160 may be easily replaced in case where the water sealing member 160 is abraded or damaged.

The water sealing member 160 may be manufactured in such a manner that the transverse length thereof ranges from 5% to 15% of the transverse length of the transverse compartment member 120 and the length thereof is equal to the longitudinal length of the transverse compartment member 120, that is, the length of the transverse of the transverse compartment member 120.

In such a structure, when the transverse compartment member 120 is moved to the retreat position, the water sealing member 160 is also moved to the retreat position. Therefore, it is possible to substantially prevent additional resistance which may be caused by the sealing member 160, when the sealing member 160 is installed on the of the longitudinal compartment member 110 so as to be exposed to the outside of the hull at all times, which will be described below. Furthermore, it is possible to prevent pollutants from adhering to the water sealing member 160 which is exposed to the outside at all times.

In this case, however, when the transverse compartment member 120 is driven, the water sealing member 160 is moved together at all times. Therefore, the water sealing member 160 may be easily abraded. Furthermore, since friction occurs between the water sealing member 160 and the surface of the longitudinal compartment member 110, a larger amount of power is required for driving the transverse compartment member 120 than when the water sealing member 160 is installed on the longitudinal compartment member 110.

The water sealing member 160 may be installed on the surface of the longitudinal compartment member 110. In this case, the water sealing member 160 may be provided integrally with the surface of the longitudinal compartment member 110, or provided detachably from the surface of the longitudinal compartment member 110. When the water sealing member 160 is installed detachably from the longitudinal compartment member 110, the water sealing member 160 may be easily replaced in case where the water sealing member 160 is abraded or damaged.

At this time, the water sealing member 160 is installed at the same inclination angle as that of the transverse compartment member 120 when the transverse compartment member 120 is moved to the projection position. The water sealing member 160 may be manufactured in such a manner that the transverse length thereof ranges from 5% to 15% of the transverse length of the transverse compartment member 120 and the longitudinal length thereof is equal to the longitudinal length of the transverse compartment member 120, that is, the length of the transverse end of the transverse compartment member 120.

The water sealing members 160 may be installed on the surface of the longitudinal compartment member 110 so as to correspond to an arbitrary turning angle of the transverse compartment member 120 within the turning radius of the transverse compartment member 120. In this case, although the transverse compartment member 120 is turned according to the arbitrary angle depending on the operation situation of the air cavity vessel, the water sealing is smoothly accomplished. Therefore, the air cavity formed in the space area of the bottom 101 may be continuously maintained.

Referring to FIG. 10, the water sealing member 160 is installed to seal the gap between the longitudinal compartment member 110 and the transverse compartment member 120. Referring to FIG. 11. however, the transverse compartment member 120 may be separated by the longitudinal partition 111 to divide the space area of the bottom. In this case, a gap may occur between the transverse compartment member 120 and the longitudinal partition 111 as well as between the transverse compartment member 120 and the longitudinal compartment member 110. Therefore, the sealing member 160 may also be installed between the transverse compartment member 120 and the longitudinal partition 111.

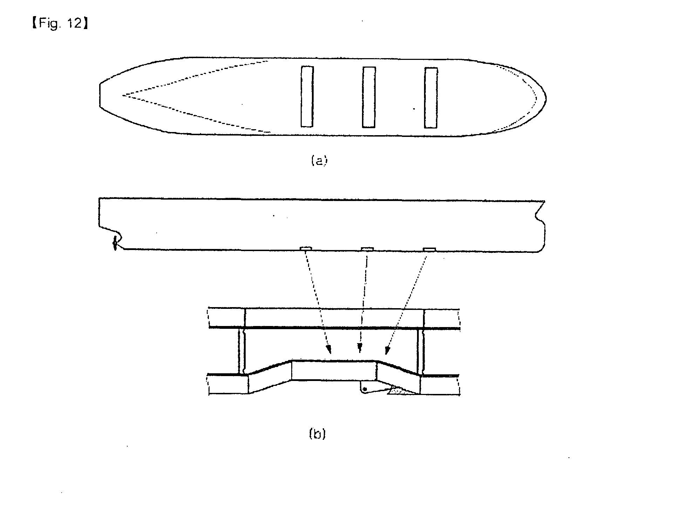

FIG. 12 is a schematic view of an air cavity vessel according to another embodiment of the present invention. FIG. 12A is a plan view of the bottom of the air cavity vessel, and FIG. 12B is an expanded view of a concaved bottom portion.

In the air cavity vessel according to the embodiment of the present invention, space areas for forming an air cavity may be formed by the longitudinal compartment members 110, the longitudinal partitions 111, and the transverse compartment member 120, which are installed on the bottom of the air cavity vessel, as illustrated in FIG. 2.

As described with reference to FIGS. 2 and 3, the space areas may be formed by installing the longitudinal compartment members 110, the longitudinal partitions 111, and the transverse compartment members 120 on the surface of the bottom 101, in a state in which the surface of the bottom 101 is left as it is. Alternatively, the space areas may be formed by installing the transverse compartment members 110, the longitudinal compartment members 111, and the transverse compartment members 120 in a groove hollowed out in the surface of the bottom 101.

In this case, the transverse compartment members 120 may be fixed to the bottom 101 or movably installed. When the transverse compartment members 120 are fixed to the bottom 101, additional resistance may be caused by the transverse compartment member 120, in case where an air cavity does not need to be formed or may not be formed due to an excessive movement of the hull, that is, large rolling or which occurs depending on the wave state of the sea. Accordingly, the speed performance of the air cavity vessel may be reduced.

However, when the transverse compartment members 120 are movably installed, the transverse compartment members 120 may be moved to the retreat position, in case where an air cavity does not need to be formed or may not be formed. Therefore, it is possible to substantially prevent the occurrence of additional resistance.

When the transverse compartment members 120 need to be moved to the retreat position, concave portions may be formed in the surface of the bottom so as to house the transverse compartment members 120, as illustrated in FIGS. 12A and 12B. When the transverse compartment members 120 moved to the retreat position are housed in the concave portions, it is possible to prevent the additional resistance which may be caused by the transverse compartment members 120.

Referring to FIGS. 12A and 12B, the concave portion may be formed in such a manner that the transverse and longitudinal lengths thereof are equal to those of the transverse compartment member 120, in order to house the entire transverse compartment member 120.

When the water sealing member 160 is installed on the transverse compartment member 120, the transverse length of the concave portion may be determined by considering the transverse length of the water sealing member 160. That is, the concave portion may be formed in such a manner that the transverse length thereof is equal to the total transverse length of the transverse compartment member 120 and the water sealing member 160.

The depth of the concave portion may be determined by considering the thickness of the transverse compartment member 120 and a hinge unit installed inside the hull. Furthermore, the depth of the concave portion may be determined by considering the turning angle of the transverse compartment member 120 such that the interference between the hull and the transverse compartment member 120 does not occur when the transverse compartment member 120 is moved to the projection position.

Furthermore, when the space areas of the bottom are partitioned in such a manner that the transverse compartment member 120 is separated by the longitudinal partition 111 as illustrated in FIGS. 11A to 11C, the concave portion may also be separated and formed in the bottom 101.

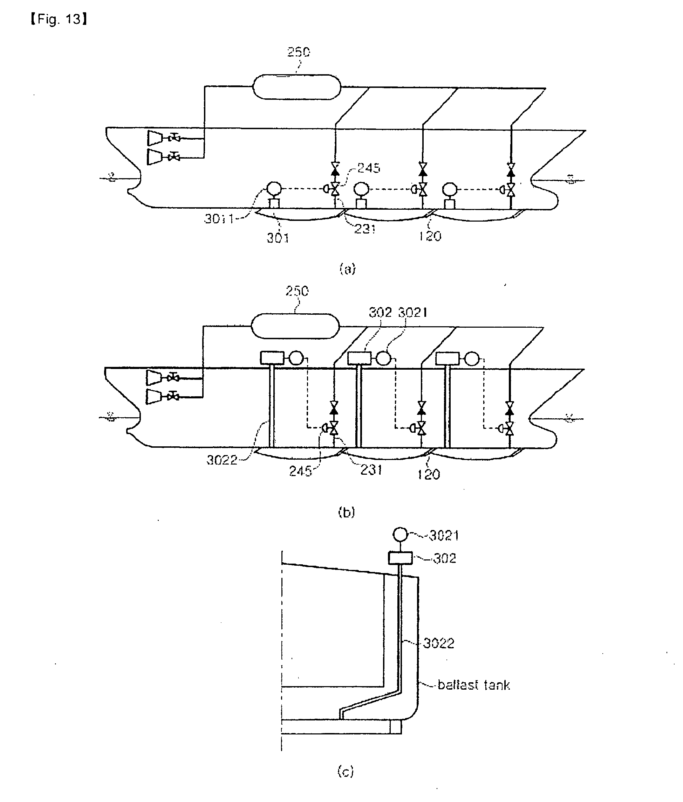

FIGS.13A to 13C are diagrams illustrating a case in which a measurement system for measuring an air cavity is installed in the air cavity vessel according to the embodiment of the present invention.

During the sailing of the air cavity vessel, the air layer within the space areas formed on the bottom of the air cavity vessel is not maintained constantly, but continuously shrinks due to the rolling or pitching caused by the operation state of the vessel or the wave state of the sea.

Therefore, when an operation for injecting air to continuously maintain such a state or form a proper air layer in the space areas is not performed at a suitable point of time, the frictional resistance to the water may be increased by the compartment members formed on the bottom. Then, the operation efficiency of the air cavity vessel inevitably decreases.

To present such a situation from occurring, the air cavity vessel includes the measurement system for measuring an air cavity, as illustrated in FIGS. 13A and 13B.

The measurement system may include an ultrasonic measurement system 301 or a radar measurement system 302.

The ultrasonic measurement system 301 measures a time which is required until a sound wave transmitted to the air layer formed over the bottom passes through the air layer, reflects from the surface of the water, and returns to the ultrasonic measurement system 301. Then, the ultrasonic measurement system 301 transfers a distance signal according to the measurement result. The radar measurement system 302 measures a time which is required until an electromagnetic wave transmitted to the air layer formed over the bottom passes through the air layer, reflects from the surface of the water, and returns to the radar measurement system 302. Then, the radar measurement system 302 transfers a distance signal according to the measurement result.

The distance signal transferred by the measurement system 301 or 302 is converted into a value expressed in a unit designated by an operator, and transferred to the operator. After the operator checks the thickness of the air layer, the operator may control the opening rate of the air valve 245 connected to the air injection nozzle 23 such that a proper air layer is maintained in the space areas of the bottom.

The above-described operation may be automated. In this case, the distance signal is transferred to a control device such as a programmable logic controller (PLC), and the control device calculates a proper signal value to control the opening rate of the air valve 245 connected to the air injection nozzle 231. Accordingly, the thickness of the air layer may be automatically controlled.

When the ultrasonic measurement system 301 is installed on the bottom as illustrated in FIG. 13A, a separate maintenance space may be additionally provided at the installation position of the measurement system, in consideration of the operator's convenience.

However, when the radar measurement system 302 is installed in the air cavity vessel as illustrated in FIG. 13B, the radar measurement system 302 may be installed on the deck of the air cavity vessel. In this case, since the measurement system is installed on the deck of the air cavity vessel, a maintenance space for the measurement system is not needed.

When the radar measurement system 302 is installed on the deck of the air cavity vessel, a measurement pipe connecting the deck and the bottom of the air cavity vessel needs to be installed. The pipe may be installed through a ballast tank, in order to save an effort to secure the installation space.

The measurement system for measuring the air cavity may be applied to the air cavity vessel in which the space areas for an air cavity are formed by the compartment formation members attached to the bottom of the air cavity vessel so as to project from the bottom, in a state in which the bottom is left as it is. However, the measurement system may also be applied to the conventional air cavity vessel having an air cavity formed in the groove of the bottom.

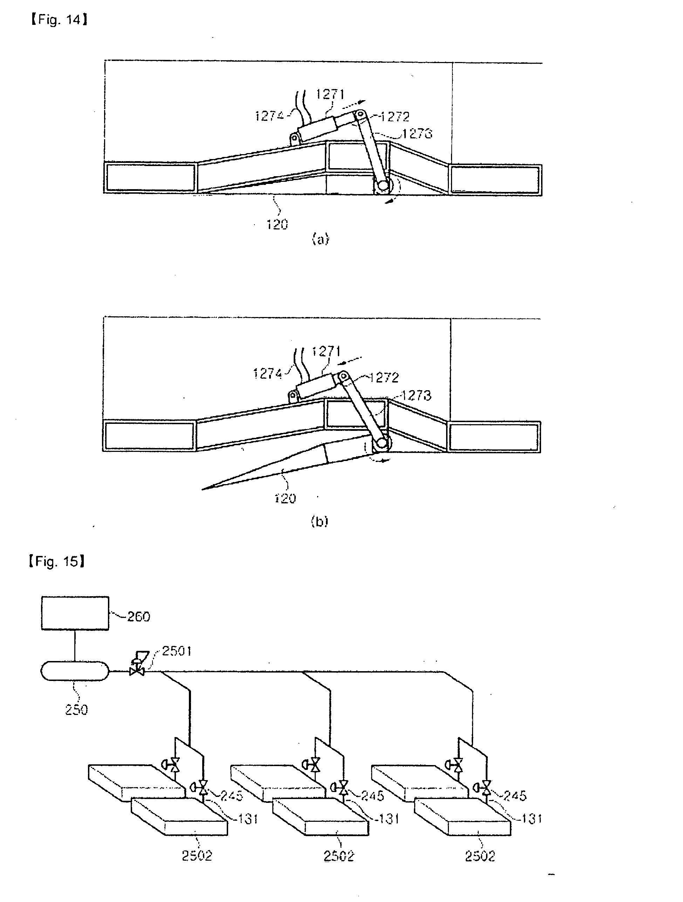

FIGS. 14A and 14B are schematic views of a hydraulically-operated movable compartment member of an air cavity vessel according to another embodiment of the present invention.

FIG. 14A is a diagram illustrating a state in which a transverse compartment member 120 serving as the movable compartment member is moved to the retreat position when the sailing of the air cavity vessel is stopped or the use of the transverse compartment member 120 is unnecessary. FIG. 14B is a diagram illustrating a state in which the transverse compartment members 120 is moved to the projection position when the use of the transverse compartment member 120 is necessary during the sailing of the air cavity vessel.

Referring to FIGS. 14A and 14B, the air cavity vessel according to the embodiment of the present invention includes the transverse compartment 120, a hydraulic transmission rod 1273, a hydraulic cylinder 1271, and a a hydraulic line 1274.

The transverse compartment member 120 is installed on the bottom so as to extend in the widthwise direction.

One end of the hydraulic transmission rod 1273 is fixed and connected to a stem-side portion of the transverse compartment member 120, and the other end thereof is turnably connected to a hydraulic cylinder rod 1272. The hydraulic transmission rod 1273 transmits a hydraulic force from the hydraulic cylinder 1271 to the transverse compartment member 120.

As described above, the one end of the hydraulic transmission rod 1273 is fixed to the transverse compartment member 120, and the other end thereof is turnably connected to the hydraulic cylinder rod 1272. Therefore, when the oil pressure supplied to the hydraulic cylinder 1271 moves the hydraulic cylinder rod 1272 to turn the transverse compartment member 120 between the retreat position and the projection position, the hydraulic transmission rod 1273 may also be turned by the turning angle of the transverse compartment member 120.

As the length of the hydraulic transmission rod 1273 is increased, the turning force increases. In this case, the hydraulic force which is provided to the hydraulic cylinder 1271 to turn the transverse compartment member 120 decreases. Accordingly, when the length of the hydraulic transmission rod 1273 is increased, a hydraulic system may be designed in such a manner as to have a smaller capacity. However, since the turning force for turning the transverse compartment member 120 increases, the strength of the hydraulic transmission rod 1273 needs to be increased with the increase of the turning force. Therefore, the hydraulic transmission rod 1273 may be formed of a high-strength material, and manufactured in such a manner as to have a large thickness.

To drive the transverse compartment member 120, the hydraulic cylinder 1271 moves the hydraulic cylinder rod 1272 to provide a driving force to the hydraulic transmission rod 1273.

The hydraulic cylinder 1271 is fixed to the inner surface of the bottom of the air cavity vessel. Accordingly, the force for turning the transverse compartment member 120 is applied to the hydraulic transmission rod 1273 from the hydraulic cylinder 1271. At this time, when the hydraulic cylinder 1271 is fixed to the inner surface of the bottom, the hydraulic cylinder 1271 may be turnably fixed. In this case, the turning operation of the hydraulic transmission rod 1273, which occurs when the transverse compartment member 1273 is turned, may absorb the turning operation of the hydraulic cylinder 1271. Therefore, it is possible to substantially prevent the damage of the fixed portion when the hydraulic cylinder 1271 is turned.

The hydraulic line 1274 supplies the oil pressure to the hydraulic cylinder 1271.

Hereinafter, the operation of the transverse compartment member 120 according to the embodiment of the present invention will be described.

First, the operation of the transverse compartment members 120 according to a case in which the sailing of the air cavity vessel is stopped or the use of the transverse compartment member 120 is unnecessary will be described.

In this case, the oil pressure is supplied through the hydraulic line 1274 connected to the hydraulic cylinder 1271, as illustrated in FIG. 14A.

Referring to FIG. 14A, the oil pressure supplied to the hydraulic cylinder 1271 pushes the hydraulic cylinder rod 1272, and the hydraulic transmission rod 1273 which is turnably connected to the hydraulic cylinder rod 1272 is turned in the clockwise direction, because the hydraulic transmission rod 1273 is fixed and connected to the transverse compartment member 120. Accordingly, the transverse compartment member 120 connected to the hydraulic transmission rod 1273 is also turned in the clockwise direction so as to move to the retreat position.

However, when the use of the transverse compartment member 120 is required during the sailing of the air cavity vessel, the oil pressure of the hydraulic line 1274 connected to the hydraulic cylinder 1271 is removed as illustrated in FIG. 14B.

Referring to FIG. 14B, the oil pressure removed from the hydraulic cylinder 1271 pulls the hydraulic cylinder rod 1272, and the hydraulic transmission rod 1273 which is turnably connected to the hydraulic cylinder rod 1272 is turned in the counterclockwise direction, the hydraulic transmission rod 1273 is fixed and connected to the transverse compartment member 120. Accordingly, the transverse compartment member 120 connected to the hydraulic transmission rod 1273 is also turned in the counterclockwise direction so as to move to the projection position.

While the above-described operation is performed, an operator may control an oil pressure relief valve connected to the hydraulic cylinder 1271 to fix the transverse compartment member 120 at a position desired by the operator. Alternatively, the hydraulic cylinder 1271 may be controlled by or a control device such as a PLC. In this case, the transverse compartment member 120 may be precisely driven to properly deal with the sailing situation of the air cavity vessel.

The embodiment of the present invention may be applied to the air cavity vessel in which the plurality of compartment members are installed on the bottom of the air cavity vessel and the plurality of space areas for an air cavity are formed, in order to house the transverse compartment members. Furthermore, the embodiment of the present invention may be applied to the conventional air cavity vessel having an air cavity formed in the groove of the bottom as well as the air cavity vessel in which the space areas for an air cavity are formed by the compartment members attached to the bottom of the vessel so as to project from the bottom, in a state in which the bottom is left as it is.

FIG. 15 is a schematic view of an air supply system for stably supplying air to the air cavity formed over the bottom of the air cavity vessel according to another embodiment of the present invention.

When rolling or pitching occurs during the sailing of the air cavity vessel, the air cavity within the space areas formed over the bottom of the air cavity vessel may shrink. Therefore, in order to maintain a constant air layer, a proper amount of compressed air needs to be supplied depending on the situation.

In this case, an air compressor needs to be repetitively loaded and unloaded to supply a proper amount of compressed air. Such an operation of the air compressor may reduce the lifetime of the air compressor which is expensive equipment, and may also reduce the durability of pipes and facilities around the air compressor.

Furthermore, when the air compressor directly supplies air the air cavity to form a proper air layer in the air cavity over the bottom, the air may not be supplied stably. Furthermore, when compressed air is momentarily required in the air cavity of the bottom, the air compressor may respond slowly to such a situation, or a necessary amount of air may not be supplied momentarily. In this case, the operation efficiency of the air cavity vessel inevitably decreases.

The air supply system according to the embodiment of the present invention may prevent an excessive load from being applied to the air compressor, stabilize the sailing of the air cavity vessel, and continuously and stably supply a proper amount of air regardless of the operation situation of the air cavity vessel.

Referring to FIG. 15, the air supply system according to the embodiment of the present invention includes an air compressor 260, a plurality of air valves 245, a regulating valve 2501, and an air storage container 250.

Hereinafter, the respective components of the air supply system according to the embodiment of the present invention will be described.

The air compressor 260 serves to compress air which is to be supplied to form an air layer in partitioned space areas 2502 formed on the bottom of the air cavity vessel.

The plurality of air valves 245 serve to supply the compressed air to the respective space thorough the air injection nozzles 131. By controlling the opening rate of the air valve 245, it is possible to control the amount of air to be supplied to each of the space areas 2502 formed on the bottom.

The regulating valve 2501 is installed between the air compressor 260 and the air valve 245 to maintain the compressed air at a constant pressure.

When a constant pressure is maintained by the regulating valve 2501, a proper amount of air may be supplied to the space area 2502 formed on the bottom by the air pressure which is set according to the operation state of the air cavity vessel, and a proper air layer may be formed in the air cavity of the bottom. Therefore, it is possible to increase the operation efficiency.

Furthermore, since the constant pressure is maintained, the waste of the compressed air may be prevented, and the durability and reliability of equipments of the air supply system, which are related to the air pressure, may be secured.

The pressure of the air supplied to the partitioned space areas 2502 formed on the bottom may be determined according to the draft of the air cavity vessel, and the pressure at an exit of the regulating valve 2501 may be set to various values depending on the draft of the air cavity vessel. Therefore, since a proper amount of air may be supplied depending on the operation situation of the air cavity vessel, it is possible to maintain the air layer of the air cavity in an optimal state.

In other words, when rolling or pitching occurs during the sailing of the air cavity vessel, cargo is loaded on or unloaded from the air cavity vessel, or air supply is required depending on the operation situation of the air cavity vessel, a proper amount of air may be supplied to maintain the air layer for forming a proper air cavity in the partitioned space areas 2502 formed on the bottom.

The air storage container 250 may be installed between the air compressor 260 and the air valve 245 or installed together with the regulating valve 2501. When the air storage container 250 is installed together with the regulating valve 2501, the air storage container 250 may be installed in the previous stage of the regulating valve 2501.

The air storage container 250 serves to store the air compressed by the air compressor 260, and may be designed to have a pressure two or three times higher than a proper air pressure to be supplied to the air cavity of the bottom such that the air may be sufficiently and stably supplied.

Furthermore, a constant amount of air may be continuously supplied to the space areas 2502 by the air storage container 250. Therefore, it is possible to prevent the degradation which may be caused by the continuous operation of the air compressor 260.

In order to maintain a necessary air layer in the space areas 2502 of the bottom, a proper amount of air needs to be continuously supplied. Therefore, the air compressor 260 needs to be repetitively operated and stopped. In this case, the lifetime of the air compressor 260 may be reduced. However, when a large amount of compressed air is stored in the air storage container 250, the air compressor 260 does not need to be repetitively operated and stopped. Therefore, it is possible to prevent the lifetime of the air compressor 260 from being reduced.

Furthermore, when a large amount of air is momentarily required to form an air cavity of the bottom or a large air amount exceeding the capacity of the air compressor is required, the compressed air stored in the air storage container 250 may be used. Therefore, even when the air use amount fluctuates, the compressed air stored in the air storage container 250 may be used to properly deal with the situation.

Furthermore, the air compressor may be designed in such a manner as to have a large capacity, in order to deal with the above-described case in which the air use amount fluctuates. However, when the air storage container 250 is installed, the air compressor does not need to have a larger capacity than necessary. Therefore, it is possible to reduce the equipment cost of the air cavity vessel.

The partitioned space areas formed on the bottom may be arranged in a grid pattern by using the plurality of longitudinal compartment members and the plurality of transverse compartment members,

The air compressor 260 may include a a moisture trap and a dryer which are installed downstream of the air compressor 260 and serve to remove condensed water or moisture in compressed air. When the condensed water freezes in the winter time, it may disturb the air flow. However, since the moisture trap and the dryer may remove the condensed water or moisture in compressed air, it is possible to increase the efficiency of the air compressor.

Furthermore, the air compressor 260 may include a relief valve or check valve installed downstream thereof. The relief valve may secure the stability of equipments related to the air pressure, and the check valve may prevent air from flowing backward. Therefore, the air layer of the air cavity may be maintained effectively.

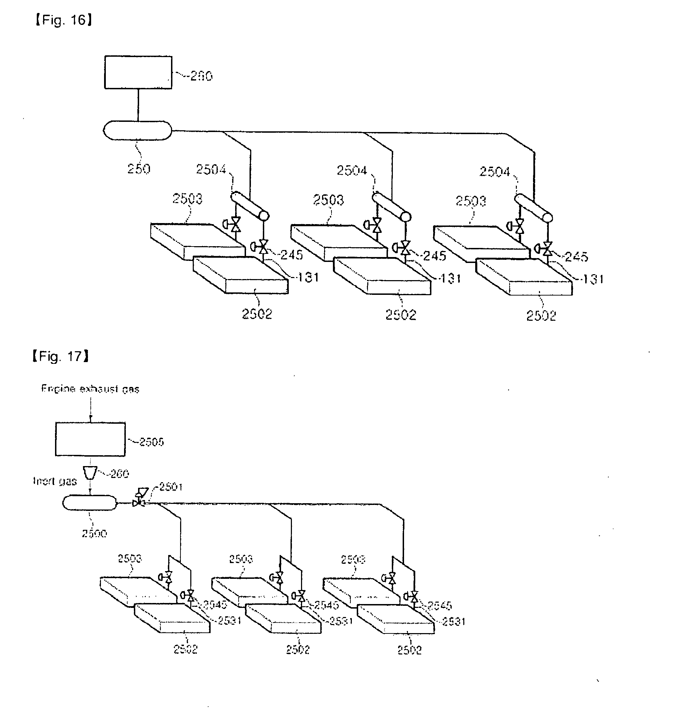

FIG. 16 is a schematic view of an air supply system for stably supplying air to the air cavity formed over the bottom of the air cavity vessel according to another embodiment of the present invention.

When rolling or pitching occurs during the sailing of the air cavity vessel, the air cavity within the space areas formed over the bottom of the air cavity vessel may shrink. Therefore, in order to maintain a constant air layer, a proper amount of compressed air needs to be supplied depending on the situation.

At this time, the space areas are arranged in a grid pattern. Therefore, when air valves connected to the same air supply pipe are used to supply air to the space areas, an amount of air to be supplied to one space area may have an effect upon an amount of air to be supplied to another space area adjacent to the one space area.

In particular, when rolling or pitching of the air cavity vessel occurs, air may escape from some space areas among the partitioned space areas formed over the bottom of the air cavity vessel. In this case, when an air valve connected to the corresponding space area is rapidly opened to supplement air to the space area, the amount of air to be supplied to another space area, which is connected to the same air supply pipe and adjacent to the corresponding space area, may decrease momentarily.

The air supply system according to the embodiment of the present invention is constructed in such a manner that, when supplying air to some space areas among the plurality of partitioned space areas formed over the bottom, the air supply system may continuously supply a constant amount of air to the corresponding space area, even through a a considerable amount of air is rapidly consumed in another space area adjacent to the corresponding space area.

Referring to FIG. 16, the air supply system according to the embodiment of the present invention includes an air compressor 260, an air storage container 250, a plurality of air valves 245, and a header 2504.

Hereinafter, the respective components of the air supply system will be described.

The air compressor 260 serves to compress air which is to be supplied to form an air layer in a plurality of partitioned space areas 2502 and 2503 formed on the bottom of the air cavity vessel.

The air storage container 250 is installed between the air compressor 260 and the header 2504. To smoothy supply stored air, a regulating valve may be installed downstream of the air storage container 250, as illustrated in FIG. 15.

The air storage container 250 has the same function as described with reference to FIG. 15.

The air valves 245 serve to supply the compressed air to the respective space areas through the air injection nozzles 131. By controlling the opening rate of the air valve 245, it is possible to control the amount of air to be supplied to each of the space areas formed on the bottom.

The header 2504 is installed between the air storage container 250 and the air valves 245 so as to contain the compressed air.

The header 2504 contains a predetermined amount of compressed air. Therefore, when air escapes from some space areas among the partitioned space areas formed over the bottom due to the rolling or pitching of the air cavity vessel, the compressed air contained in the header 2504 is supplied to the corresponding space area, even though the air valve connected to the space area is rapidly opened to supplement the air to the space area. Therefore, the amount of air to be supplied to another space area, which is connected to the same air supply pipe and adjacent to the corresponding space area, is prevented from being reduced momentarily.

The partitioned space areas formed on the bottom may be arranged in a grid pattern by using the plurality of longitudinal compartment members and the plurality of transverse compartment members.

The air compressor 260 may include a moisture trap and a dryer which are installed at the rear end of the air compressor 260 and serve to remove condensed water or moisture in compressed air. When the condensed water freezes in the winter time, it may disturb the air flow. However, since the moisture trap and the dryer may remove the condensed water or moisture in compressed air, it is possible to increase the efficiency of the air compressor.

Furthermore, the air compressor 260 may include a relief valve or check valve installed downstream thereof. The relief valve may secure the stability of equipments related to the air pressure, and the check valve may prevent air from flowing backwards. Therefore, the air layer of the air cavity may be maintained effectively.

FIG. 17 is a diagram illustrating a method for supplying inert gas to the air cavity formed over the bottom of the air cavity vessel according to another embodiment of the present invention.

When a predetermined time passes after the air cavity vessel is docked in a state in which the bottom thereof is submerged, various sea creatures including microorganisms, marine plants, and shellfish may adhere to the bottom of the air cavity vessel.

When various sea creatures adhere to the bottom, the frictional resistance and weight of the air cavity vessel may increase. In this case, the sailing speed of the air cavity vessel may be reduced, and the operation cost thereof may be increased by excessive fuel consumption. Therefore, the operation efficiency of the air cavity vessel inevitably decreases.

Furthermore, when sea creatures adhere to the bottom of the air cavity vessel, the outer surface of the bottom is apt to corrode quickly.

The inert gas supply method according to the embodiment of the present invention may solve such a problem by supplying inert gas to the partitioned space areas formed over the bottom of the air cavity vessel.

In the inert gas supply method according to the embodiment of the present invention, inert gas produced by an inert gas system (IGS) of the air cavity vessel is supplied to the partitioned space areas formed over the bottom to prevent the adherence of sea creatures.

Hereinafter, the inert gas supply method according to the embodiment of the present invention will be described in detail.

The IGS 2505 is a system for producing inert gas from exhaust gas of the air cavity vessel. The principle is well-known, and thus the descriptions thereof will be omitted.

The inert gas is gas or gas mixture which contains oxygen contributing to the combustion of hydrocarbon by 5% to 8%.

The inert gas is injected to a cargo tank in the air cavity vessel, in order to prevent the explosion of the cargo tank.

When the inert gas is injected into the cargo tank, the oxygen concentration within the cargo tank is reduced by the inert gas containing oxygen only by 5% to 8%. The explosion causes of the cargo tank may include heat, fuel, and oxygen. Therefore, as the concentration of oxygen serving one of the explosion causes is reduced, it is possible to stop or prevent the explosion of the cargo tank.

Furthermore, when the inert gas is used to form the air cavity within the space areas 2502 and 2503 formed over the bottom during the sailing of the air cavity vessel, the oxygen concentration within the space areas 2502 and 2503 formed over the bottom significantly decreases to destroy the inhabiting environment of oxygen-breathing sea creatures. Therefore, it is possible to prevent sea creatures from adhering to the bottom or the compartment members inside the partitioned space areas formed over the bottom.

While the air cavity vessel sails, sea creatures rarely adhere to the bottom or the compartment members inside the partitioned space areas formed over the bottom. However, since the air cavity vessel contains the inert gas in the space areas of the bottom, it is possible to prevent sea creatures from adhering to the bottom or the compartment members of the bottom while the air cavity vessel is docked or stays on the sea for a short time.

Furthermore, when the air cavity vessel is docked in the harbor, a predetermined amount of inert gas may be supplied to the space areas formed on the bottom. Then, even while the air cavity vessel is docked, it is possible to prevent sea creatures from adhering to the bottom.

As described above, the inert gas may be supplied to the partitioned space areas formed on the bottom, in order to prevent sea creatures from adhering to the bottom of the air cavity vessel. Furthermore, during the sailing of the air cavity vessel, the air layer for the air cavity may be formed over the bottom to reduce the frictional resistance of the air cavity vessel, thereby reducing the power consumption of the air cavity vessel. In this embodiment of the present invention, the air layer means gas or gas mixture containing inert gas.

Since the IGS 2505 is mainly used when cargo is loaded or unloaded, the IGS 2505 is rarely used during the sailing of the air cavity vessel. Therefore, the capacity of the IGS 2505 does not need to be additionally increased, even though inert gas is used during the sailing of the air cavity vessel. However, the IGS 2505 may have a capacity enough to form a proper air layer in the space areas of the bottom.

FIG. 17 illustrates an example in which the air compressor 260 is installed in the rear side of the IGS 2505, an inert gas storage container 2500 is installed downstream of the air compressor 260, a regulating valve 2501 is installed downstream of the inert gas storage container 2500, and the air compressor 260 compresses the inert gas produced by the IGS 2505 and supplies the compressed inert gas to the partitioned space areas formed on the bottom through inert gas valves 2545 and inert gas injection nozzles 2531.

However, the regulating valve 2501 may be excluded, and only the inert gas storage container 2500 may be installed to supply the inert gas to the partitioned space areas formed over the bottom through the inert gas valves 2545 and the inert gas injection nozzles 2531.

In the embodiment of FIG. 17, when the inert gas storage container 2500 or the regulating valve 2501 is used to supply the inert gas to the space areas, the inert gas may be stably supplied to the air cavity for the air layer of the bottom of the air cavity vessel instead of air, as described in the embodiment of the FIG. 15.

Furthermore, when a header is installed as illustrated in FIG. 16, it is possible to obtain the same effect as described with reference to FIG. 16.

Furthermore, the above-described method may not only be applied to the air cavity vessel in which the plurality of space areas are formed by the plurality of compartment formation members formed on the surface of the bottom, that is, which includes the plurality of space areas arranged in a grid pattern, but may also be applied to the air cavity vessel in which the plurality of space areas are formed in a grid pattern by the plurality of transverse compartment members and longitudinal compartment members, that is, which includes the plurality of space areas formed by the plurality of compartment formation members.

According to the embodiments of the present invention, the space areas for the air cavity vessel are formed over the bottom of the air cavity vessel without design changes for an existing vessel, which makes it possible to reduce time, effort, and cost required for manufacturing the air cavity vessel.

Furthermore, the air collection device collects the air escaping from the air cavity and supplies the collected air to the space areas. Therefore, the air may be prevented from reaching the propeller, and the power consumed by the air compressor for compressing air to form the air cavity may be reduced.

Furthermore, the air supply control system monitors whether a proper air cavity is formed or not during the sailing of the air cavity vessel, and controls the amount of air to be supplied to the space areas such that the air cavity may be formed properly.

Furthermore, the driving operation mechanism and the fixing operation mechanism using an electromagnet or compressed air as an operational source may drive and fix the transverse compartment member by using a small amount of power.

Furthermore, several stages of stoppers may be installed to control the transverse compartment member with precision, and a proper air cavity may be formed in a local circulating flow generated by forming a proper vortex in the rear side of the transverse compartment member.

Furthermore, the transverse compartment member may be properly moved to reduce vortex resistance, which makes it possible to reduce the power loss of the air cavity vessel.

Furthermore, even when the transverse compartment member needs to be continuously operated, only a small amount of power may be supplied to the fixing device to fix the transverse compartment member. Therefore, since a large-capacity power source for continuously operating the transverse compartment member is not needed, it is possible to reduce the power consumption of the air cavity vessel and the resistance to the water.

Furthermore, the spring may be installed on the rod so as to absorb the impact of the transverse compartment member, which is caused by the frictional resistance to the water during the sailing of the air cavity vessel. Therefore, it is possible to improve the durability of the transverse compartment member.

Furthermore, the power required for the air supply may be minimized by differentially supplying the air to the space areas formed on the bottom of the air cavity vessel. Therefore, it is possible to obtain the maximum fuel reduction effect.

Furthermore, the water sealing member may be installed to seal the gap between the transverse compartment member and the longitudinal compartment member, thereby preventing water from being introduced into the plurality of space areas for forming an air cavity. Therefore, the air cavity may be effectively formed in the space areas, and the power required for forming the air cavity may be minimized. Accordingly, it is possible to obtain the maximum fuel reduction effect.

Furthermore, the concave portions may be formed in the bottom of the air cavity vessel to house the transverse compartment members. Therefore, the resistance caused by the projected compartment members may be reduced. Accordingly, it is possible to improve the speed of the cavity vessel and to reduce the power consumption of the air cavity vessel.

Furthermore, the ultrasonic measurement system or radar measurement system may be used to measure the thickness of the air layer forming the air cavity. Therefore, it is possible to reduce additional resistance and unnecessary power consumption for forming the air layer.

Furthermore, when the oil pressure is used to drive the transverse compartment member and the portion to which the hydraulic force is transmitted is positioned at the stem side of the transverse compartment member, the length of the hydraulic transmission rod may be increased to reduce the hydraulic force for driving the transverse compartment member. Furthermore, the structure for driving the transverse compartment member may be simplified.

Furthermore, the regulating valve and the air storage container may be installed between the air compressor and the air valves to stably and continuously supply air to the respective partitioned space areas at a constant pressure. Therefore, even when rolling or pitching occurs during the sailing of the air cavity vessel, a proper air layer may be maintained, and the durability of various equipments for supplying air may be improved.

Furthermore, the header may be installed in the rear side of the air valves to stably and continuously supply air to the respective partitioned space areas formed on the bottom of the air cavity vessel. Therefore, even when rolling or pitching occurs during the sailing of the air cavity vessel, a proper air layer may be maintained.

Furthermore, inert gas may be supplied to the air cavity formed over the bottom during the sailing of the air cavity vessel, in order to prevent sea creatures such as barnacles from adhering to the bottom of the air cavity vessel or movable compartment members inside space areas formed on the bottom. Therefore, it is possible to reduce frictional resistance.

While the present invention has been described with respect to the specific embodiments, it will be apparent to those skilled in the art that various changes and modifications may be made without departing from the scope of the invention as defined in the following claims.

## Claims

1. An air cavity vessel (100) comprising:
an air compressor (260) for compressing air to be injected to form an air layer in space areas (S, 2502, 2503) formed on the bottom of the air cavity vessel (100);
a plurality of air valves (245, 2545) for supplying the air compressed by the air compressor (260) to the respective space areas (S, 2502, 2503) formed on the bottom; and
a header (2504) installed between the air compressor and (260) the air valves (245, 2545) for containing the compressed air;
**characterized in that** it further comprises:
a plurality of longitudinal compartment members (110,111) formed as separate members attached to at least both sides of the bottom and projected from the bottom to partition the bottom in a longitudinal direction; and
a plurality of transverse compartment members (120) extending in a widthwise direction on the bottom to form said space areas (S) for the air cavity in cooperation with the longitudinal compartment members (110,111);
and **in that** stem-side ends of the transverse compartment members (120) are supported by a hinge unit (121) such that the transverse compartment members (120) are turnably driven within a constant angle and are movable between a retreat position and a projection position, wherein the projection level of the transverse compartment members (120) from the surface of the bottom of the air cavity vessel is controlled so as to vary depending on the sailing speed of the air cavity vessel (100).

2. The air cavity vessel (100) according to claim 1, further comprising an air storage container (250) installed between the air compressor (260) and the header (2504) for storing the compressed air.

3. The air cavity vessel (100) according to any one of claims 1 to 2, wherein air is differentially supplied to the space areas (S, 2502, 2503) formed on the bottom of the air cavity vessel (100).

4. The air cavity vessel (100) according to claim 3, wherein, for both side surfaces of the respective space areas (S, 2502, 2503) positioned in a longitudinal direction on the bottom of the air cavity vessel, an air supply amount decreases from a space area positioned in the stem side of the air cavity vessel toward a space area positioned in the stern side of the air cavity vessel.

5. The air cavity vessel (100) according to claim 3 or 4, wherein, for the respective space areas (S, 2502, 2503) positioned in a longitudinal direction on the bottom of the air cavity vessel, an air supply amount decreases from a space area positioned in the stem side of the air cavity vessel (100) toward a space area positioned in the stem side of the air cavity vessel (100).

6. The air cavity vessel (100) according to any one of claims 1 to 5, further comprising an ultrasonic measurement system (301) or radar measurement system (302) for measuring the thickness of the air layer within the space areas (S, 2502, 2503) formed on the bottom of the air cavity vessel (100).

7. The air cavity vessel (100) according to claim 6, wherein the ultrasonic measurement system (301) or radar measurement system (302) is installed in such a manner as to measure the thickness of the air layer at the rear portion of the space area (S, 2502, 2503).

8. The air cavity vessel (100) according to any one of claims 1 to 7, comprising a plurality of headers (2504).

9. The air cavity vessel (100) according to any one of claims 1 to 8, further comprising a plurality of concave portions formed in the bottom of the air cavity vessel (100) so as to house the transverse compartment members (120).

10. The air cavity vessel (100) according to claim 7, wherein the radar measurement system (302) is installed on the deck of the air cavity vessel (100), and a measurement pipe (3022) is installed from the radar measurement system (302) to the bottom of the air cavity vessel where the space areas (S, 2502, 2503) are formed.

11. The air cavity vessel (100) according to claim 10, wherein the measurement pipe (3022) is installed to pass through a ballast tank installed in the air cavity vessel (100).

12. The air cavity vessel (100) according to any one of claims 1 to 11, wherein the air injected to form the air layer within the space areas (S, 2502, 2503) formed on the bottom of the air cavity vessel (100) comprises inert gas produced by an inert gas system (2505) mounted in the air cavity vessel (100).

13. The air cavity vessel (100) according to claim 12, further comprising an inert gas storage container (2500) installed downstream of the inert gas system (2505) for storing inert gas.

14. The air cavity vessel (100) according to claim 13, further comprising a regulating valve (2501) installed downstream of the inert gas storage container (2500).

15. The air cavity vessel (100) according to any one of claims 1 to 14, wherein the projection level of the transverse compartment members (120) is controlled in the range of 0.3 m to 2.0 m.

## Patentansprüche

1. Schiff mit Lufthohlraum (100), umfassend:
einen Luftverdichter (260) zum Verdichten von Luft, die einzupressen ist, um eine Luftschicht in Raumbereichen (S, 2502, 2503) zu bilden, die am Boden des Schiffs mit Lufthohlraum (100) gebildet sind,
mehrere Luftventile (245, 2545) zum Zuführen der durch den Luftverdichter (260) verdichteten Luft zu den entsprechenden Raumbereichen (S, 2502, 2503), die auf dem Boden gebildet sind, und
ein Sammelrohr (2504), das zwischen dem Luftverdichter (260) und den Luftventilen (245, 2545) eingerichtet ist, um die verdichtete Luft zu enthalten,
**dadurch gekennzeichnet, dass** es ferner umfasst:
mehrere Längskammerelemente (110, 111), die als separate Elemente gebildet sind, die an zumindest beiden Seiten des Bodens befestigt sind und von dem Boden hervorstehen, um den Boden in einer Längsrichtung aufzuteilen, und
mehrere Querkammerelemente (120), die sich in einer Breitenrichtung auf dem Boden erstrecken, um die Raumbereiche (S) für den Lufthohlraum im Zusammenwirken mit den Längs- und Querkammerelementen (110, 111) zu bilden,
und dass die Vordersteven-Seitenenden der Querkammerelemente (120) derart durch eine Scharniereinheit (121) getragen werden, dass die Querkammerelemente (120) drehbar innerhalb eines konstanten Winkels angetrieben werden und zwischen einer zurückgezogenen und einer hervorstehenden Position beweglich sind, wobei die Höhe des Hervorstehens der Querkammerelemente (120) von der Fläche des Bodens des Schiffs mit Lufthohlraum derart gesteuert wird, dass sie in Abhängigkeit von der Fahrgeschwindigkeit des Schiffs mit Lufthohlraum (100) variiert.

2. Schiff mit Lufthohlraum (100) nach Anspruch 1, das ferner einen Luftspeicherbehälter (250) umfasst, der zwischen dem Luftverdichter (260) und dem Sammelrohr (2504) zum Speichern der verdichteten Luft eingerichtet ist.

3. Schiff mit Lufthohlraum (100) nach einem der Ansprüche 1 bis 2, wobei die Luft den Raumbereichen (S, 2502, 2503), die auf dem Boden des Schiffs mit Lufthohlraum (100) gebildet sind, differentiell zugeführt wird.

4. Schiff mit Lufthohlraum (100) nach Anspruch 3, wobei für beide Seitenflächen der jeweiligen Raumbereiche (S, 2502, 2503), die in einer Längsrichtung auf dem Boden des Schiffs mit Lufthohlraum positioniert sind, eine Luftzufuhrmenge von einem Raumbereich, der sich in der Vorderstevenseite des Schiffs mit Lufthohlraum befindet, in Richtung eines Raumbereichs abnimmt, der in der Hinterstevenseite des Schiffs mit Lufthohlraum positioniert ist.

5. Schiff mit Lufthohlraum (100) nach Anspruch 3 oder 4, wobei für die jeweiligen Raumbereiche (S, 2502, 2503), die in einer Längsrichtung auf dem Boden des Schiffs mit Lufthohlraum positioniert sind, eine Luftzufuhrmenge von einem Raumbereich, der in der Vorderstevenseite des Schiffs mit Lufthohlraum (100) positioniert ist, in Richtung eines Raumbereichs abnimmt, der in der Hinterstevenseite des Schiffs mit Lufthohlraum (100) positioniert ist.

6. Schiff mit Lufthohlraum (100) nach einem der Ansprüche 1 bis 5, das ferner ein Ultraschall-Messsystem (301) oder Radarmesssystem (302) zum Messen der Dicke der Luftschicht innerhalb der Raumbereiche (S, 2502, 2503) umfasst, die auf dem Boden des Schiffs mit Lufthohlraum (100) gebildet sind.

7. Schiff mit Lufthohlraum (100) nach Anspruch 6, wobei das Ultraschall-Messsystem (301) oder Radarmesssystem (302) derart eingerichtet ist, dass die Dicke der Luftschicht am hinteren Abschnitt des Raumbereichs (S, 2502, 2503) gemessen wird.

8. Schiff mit Lufthohlraum (100) nach einem der Ansprüche 1 bis 7, das mehrere Sammelrohre (2504) umfasst.

9. Schiff mit Lufthohlraum (100) nach einem der Ansprüche 1 bis 8, das ferner mehrere konkave Abschnitte umfasst, die im Boden des Schiffs mit Lufthohlraum (100) gebildet sind, um die Querkammerelemente (120) unterzubringen.

10. Schiff mit Lufthohlraum (100) nach Anspruch 7, wobei das Radarmesssystem (302) auf dem Deck des Schiffs mit Lufthohlraum (100) eingerichtet ist und ein Messrohr (3022) vom Radarmesssystem (302) zum Boden des Schiffs mit Lufthohlraum eingerichtet ist, wo die Raumbereiche (S, 2502, 2503) gebildet sind.

11. Schiff mit Lufthohlraum (100) nach Anspruch 10, wobei das Messrohr (3022) eingerichtet ist, um durch einen Ballasttank zu verlaufen, der im Schiff mit Lufthohlraum (100) eingerichtet ist.

12. Schiff mit Lufthohlraum (100) nach einem der Ansprüche 1 bis 11, wobei die Luft, die eingepresst wird, um die Luftschicht innerhalb der Raumbereiche (S, 2502, 2503) zu bilden, die auf dem Boden des Schiffs mit Lufthohlraum (100) gebildet sind, Inertgas umfasst, das durch ein Inertgassystem (2505) erzeugt wird, das im Schiff mit Lufthohlraum (100) angebracht ist.

13. Schiff mit Lufthohlraum (100) nach Anspruch 12, das ferner einen Inertgas-Speicherbehälter (2500) umfasst, der dem Inertgassystem (2505) nachgelagert eingerichtet ist, um Inertgas zu speichern.

14. Schiff mit Lufthohlraum (100) nach Anspruch 13, das ferner ein Regelventil (2501) umfasst, das dem Inertgas-Speicherbehälter (2500) nachgelagert eingerichtet ist.

15. Schiff mit Lufthohlraum (100) nach einem der Ansprüche 1 bis 14, wobei die Höhe des Hervorstehens der Querkammerelemente (120) im Bereich von 0.3 m bis 2.0 m gesteuert wird.

## Revendications

1. Navire à cavité d'air (100) comportant :
un compresseur d'air (260) destiné à comprimer de l'air devant être injecté afin de former une couche d'air dans des zones d'espace (S, 2502, 2503) formées sur le fond du navire à cavité d'air (100) ;
une pluralité de soupapes d'air (245, 2545) destinées à délivrer de l'air comprimé par le compresseur d'air (260) aux zones d'espace respectives (S, 2502, 2503) formées sur le fond ; et
un collecteur (2504) installé entre le compresseur d'air et (260) les soupapes d'air (245, 2545) afin de contenir l'air comprimé ;
**caractérisé en ce qu'**il comporte en outre :
une pluralité d'éléments de compartiment longitudinaux (110, 111) sous la forme d'éléments séparés fixés sur au moins les deux côtés du fond et qui dépassent du fond afin de partitionner le fond dans une direction longitudinale ; et
une pluralité d'éléments de compartiment transversaux (120) s'étendant dans une direction de largeur sur le fond afin de former lesdites zones d'espace (S) pour la cavité d'air en coopération avec les éléments de compartiment transversaux longitudinaux (110, 111) ;
et **en ce que** des extrémités du côté proue des éléments de compartiment transversaux (120) sont supportés par une unité de charnière (121) de telle sorte que les éléments de compartiment transversaux (120) sont entraînés afin de tourner avec un angle constant et sont mobiles entre une position rentrée et une position sortie, le niveau de sortie des éléments de compartiment transversaux (120) de la surface du fond du navire à cavité d'air étant commandé de façon à varier en fonction de la vitesse de navigation du navire à cavité d'air (100).

2. Navire à cavité d'air (100) selon la revendication 1, comportant en outre un réservoir de stockage d'air (250) installé entre le compresseur d'air (260) et le collecteur (2504) afin de stocker l'air comprimé.

3. Navire à cavité d'air (100) selon l'une quelconque des revendications 1 à 2, dans lequel de l'air est délivré de manière différentielle aux zones d'espace (S, 2502, 2503) formées sur le fond du navire à cavité d'air (100).

4. Navire à cavité d'air (100) selon la revendication 3, dans lequel, pour les deux surfaces latérales des zones d'espace respectives (S, 2502, 2503) positionnées dans une direction longitudinale sur le fond du navire à cavité d'air, une quantité d'alimentation en air diminue depuis une zone d'espace positionnée dans le côté de proue du navire à cavité d'air vers une zone d'espace positionnée dans le côté de poupe du navire à cavité d'air.

5. Navire à cavité d'air (100) selon la revendication 3 ou 4, dans lequel, pour les zones d'espace respectives (S, 2502, 2503) positionnées dans une direction longitudinale sur le fond du navire à cavité d'air, une quantité d'alimentation en air diminue depuis une zone d'espace positionnée dans le côté de proue du navire à cavité d'air (100) vers une zone d'espace positionnée dans le côté de poupe du navire à cavité d'air (100).

6. Navire à cavité d'air (100) selon l'une quelconque des revendications 1 à 5, comportant en outre un système de mesure à ultrasons (301) ou un système de mesure à radar (302) destiné à mesurer l'épaisseur de la couche d'air dans les zones d'espace (S, 2502, 2503) formées sur le fond du navire à cavité d'air (100).

7. Navire à cavité d'air (100) selon la revendication 6, dans lequel le système de mesure à ultrasons (301) ou le système de mesure à radar (302) est installé de manière à mesurer l'épaisseur de la couche d'air au niveau de la partie arrière de la zone d'espace (S, 2502, 2503).

8. Navire à cavité d'air (100) selon l'une quelconque des revendications 1 à 7, comportant une pluralité de collecteurs (2504).

9. Navire à cavité d'air (100) selon l'une quelconque des revendications 1 à 8, comportant en outre une pluralité de parties concaves formées dans le fond du navire à cavité d'air (100) de façon à renfermer les éléments de compartiment transversaux (120).

10. Navire à cavité d'air (100) selon la revendication 7, dans lequel le système de mesure à radar (302) est installé sur le pont du navire à cavité d'air (100), et un tuyau de mesure (3022) est installé depuis le système de mesure à radar (302) jusqu'au fond du navire à cavité d'air où les zones d'espace (S, 2502, 2503) sont formées.

11. Navire à cavité d'air (100) selon la revendication 10, dans lequel le tuyau de mesure (3022) est installé afin de passer à travers un réservoir de ballast installé dans le navire à cavité d'air (100).

12. Navire à cavité d'air (100) selon l'une quelconque des revendications 1 à 11, dans lequel l'air injecté pour former la couche d'air dans les zones d'espace (S, 2502, 2503) formées sur le fond du navire à cavité d'air (100) comporte du gaz inerte produit par un système de gaz inerte (2505) monté dans le navire à cavité d'air (100).

13. Navire à cavité d'air (100) selon la revendication 12, comportant en outre un réservoir de stockage de gaz inerte (2500) installé en aval du système de gaz inerte (2505) afin de stocker du gaz inerte.

14. Navire à cavité d'air (100) selon la revendication 13, comportant en outre une soupape de régulation (2501) installée en aval du réservoir de stockage de gaz inerte (2500).

15. Navire à cavité d'air (100) selon l'une quelconque des revendications 1 à 14, dans lequel le niveau de sortie des éléments de compartiment transversaux (120) est commandé dans la plage de 0,3 m à 2,0 m.
